# EUROPEAN PATENT APPLICATION

(11) **EP 4 750 126 A1**
(43) Date of publication of application: **27.05.2026**
(21) Application number: 24850802.0
(22) Date of filing: 24.07.2024
(51) Int. Cl.: H04W 24/02

(54) **COMMUNICATION METHOD AND APPARATUS**

(30) Priority: 06.08.2023 CN 202310981040
(71) Applicant: HUAWEI TECHNOLOGIES CO., LTD., Shenzhen 518129 (CN)
(72) Inventor: GUO, Tao, Shenzhen, Guangdong 518129 (CN); ZHANG, Zhiqin, Shenzhen, Guangdong 518129 (CN); WU, Yizhuang, Shenzhen, Guangdong 518129 (CN)
(74) Representative: Körber, Martin Hans
(86) International application number: PCT/CN2024/107391
(87) International publication number: WO 2025/031153

(57) **Abstract**

This application belongs to the field of communication technologies, and provides a communication method and apparatus, to improve reliability of evaluating an ML model. In this method, data of different ML models may be stored in different data sets respectively, and reliability of evaluating an ML model is improved by using data in a data set corresponding to the ML model. For example, after receiving information about a first ML model, an AnLF functional entity may set related data of the first ML model to be stored in a first data set, that is, set a correspondence between the first ML model and the first data set, and send the correspondence to an MTLF functional entity by including the information about the first ML model and information about the first data set in a first message, so that the MTLF functional entity can obtain the related data of the first ML model from the first data set, to evaluate the first ML model based on the related data, so as to improve reliability of evaluating the first ML model.

## Description

This application claims priority to Chinese Patent Application No. 202310981040.8, filed with the China National Intellectual Property Administration on August 6, 2023 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

A network data analytics function (network data analytics function, NWDAF) network element has functions of data collection, model training, data analytics, and model inference. To be specific, the NWDAF may be configured to: collect related data from a network element, a third-party service server, a terminal device, or a network management system, perform model training based on the related data to obtain an artificial intelligence (artificial intelligence, AI) model or a machine learning (machine learning, ML) model, and provide the AI model or the ML model for another NWDAF network element. The AI model or the ML model may be used to assist the NWDAF network element in generating a data analytics result based on the related data. In addition, an NWDAF containing a model training logical function (Model Training logical function, MTLF) may be configured to: train a machine learning (machine learning, ML) model, and expose a new training service, for example, provide a trained ML model.

In a large-scale scenario, the NWDAF containing the MTLF usually performs evaluation, for example, accuracy evaluation and robustness evaluation, on an ML model provided for an NWDAF containing an AnLF (analytics logical function, AnLF). Specifically, how to improve reliability of evaluating the ML model is a hot issue currently discussed.

### SUMMARY

Embodiments of this application provide a communication method and apparatus, to improve reliability of evaluating an ML model.

To achieve the foregoing objective, the following technical solutions are used in this application.

According to a first aspect, a communication method is provided. The method includes: An analytics logical function AnLF functional entity receives information about a first machine learning ML model from a model training logical function MTLF functional entity, and sends a first message to the MTLF functional entity. The information about the first ML model is used to fetch the first ML model. The first message carries the information about the first ML model and information about a first data set. The first data set is used to store related data of the first ML model.

It can be learned from the method according to the first aspect that, in a large-scale scenario, related data of each ML model (for example, data generated in a process of using the ML model) is usually stored in a same data set. In the data set, it is impossible to distinguish a specific ML model to which each piece of data belongs. Therefore, the MTLF functional entity usually evaluates each ML model based on all data in the data set. However, in this manner, evaluation reliability is not high. Therefore, data of different ML models may be stored in different data sets respectively, and reliability of evaluating an ML model is improved by using data in a data set corresponding to the ML model. For example, after receiving the information about the first ML model, the AnLF functional entity may set the related data of the first ML model to be stored in the first data set, that is, set a correspondence between the first ML model and the first data set, and send the correspondence to the MTLF functional entity by including the information about the first ML model and the information about the first data set in the first message, so that the MTLF functional entity can obtain the related data of the first ML model from the first data set, to evaluate the first ML model based on the related data, so as to improve reliability of evaluating the first ML model.

In a possible design solution, the first ML model is multiple ML models, the information about the first ML model is information about the multiple ML models, the information about the first data set is information about multiple data sets, the multiple ML models are in one-to-one correspondence with the information about the multiple ML models, and the information about the multiple ML models is in one-to-one correspondence with the information about the multiple data sets. In other words, when the MTLF functional entity sends the multiple ML models to the AnLF functional entity, the AnLF functional entity may set a correspondence between the multiple ML models and the multiple data sets, and send the correspondence to the MTLF functional entity, so that the MTLF functional entity fetches a data set corresponding to any one of the multiple ML models, and evaluates the ML model, to improve reliability of evaluating the ML model.

In a possible design solution, the information about the first ML model is any one of the following: identification information of the first ML model, a uniform resource locator URL address of the first ML model, or a fully qualified domain name FQDN of the first ML model. That is, the first ML model may be accurately indicated by including the information, to ensure that the MTLF functional entity successfully obtains the correspondence between the first ML model and the first data set.

In a possible design solution, the information about the first data set includes identification information of the first data set and/or identification information of a first analytics data repository function ADRF functional entity. To be specific, when each data set is stored in one ADRF, a correspondence between a data set and the ADRF functional entity may be preset or predefined, so that only the correspondence between the first data set and the first ML model can be indicated. When there are multiple ADRFs, a correspondence between a data set and an ADRF functional entity may be indicated. For example, the identification information of the first data set and the identification information of the first ADRF functional entity are included in the first message, to indicate that the first data set is stored in the first ADRF functional entity. In this way, content contained in the information about the first data set may be flexibly set based on an actual situation.

In a possible design solution, before the AnLF functional entity receives the information about the first ML model from the MTLF functional entity, the method according to the first aspect further includes: The AnLF functional entity sends a request message to the MTLF functional entity. The request message is used to request an ML model. Correspondingly, that the AnLF functional entity receives the information about the first ML model from the MTLF functional entity includes: The AnLF functional entity receives the information about the first ML model from the MTLF functional entity in response to the request message. That is, when requesting the ML model from the MTLF functional entity, the AnLF functional entity may not include the information about the first data set in the request message, but sends the first message based on the first ML model after receiving the first ML model. In this way, inaccuracy of the information about the first data set carried in the request message can be avoided, and communication overheads can be reduced.

In a possible design solution, before the AnLF functional entity receives the information about the first ML model from the MTLF functional entity, the method according to the first aspect further includes: The AnLF functional entity sends a request message to the MTLF functional entity. The AnLF functional entity receives information about a second ML model from the MTLF functional entity in response to the request message. The request message carries information about a second data set. The second data set is used to store related data of the ML model sent by the MTLF functional entity after the MTLF functional entity receives the request message. The information about the second ML model is used to fetch the second ML model. It may be understood that, when requesting the ML model from the MTLF functional entity, the AnLF functional entity includes information about a data set corresponding to the ML model in the request message. This can prevent the AnLF functional entity from sending, after receiving the second ML model, a message indicating a correspondence between the second ML model and the second data set, to reduce communication overheads.

Optionally, the information about the second data set includes identification information of the second data set and/or identification information of a second ADRF functional entity. To be specific, when each data set is stored in one ADRF, a correspondence between a data set and the ADRF functional entity may be preset or predefined, so that only the correspondence between the second data set and the second ML model can be indicated. When there are multiple ADRFs, a correspondence between a data set and an ADRF functional entity may be indicated. For example, the identification information of the second data set and the identification information of the second ADRF functional entity are included in the request message, to indicate that the second data set is stored in the second ADRF functional entity. In this way, content contained in the information about the second data set may be flexibly set based on an actual situation.

Optionally, the first ML model is an ML model retrained based on the second ML model, or the first ML model is a newly generated ML model.

In a possible design solution, the method according to the first aspect further includes: The AnLF functional entity receives, from the MTLF functional entity, a request for ML model monitoring. The request for ML model monitoring carries the information about the first ML model and information about a third data set. The third data set is used to store the related data of the first ML model.

Alternatively, in another possible design solution, the method according to the first aspect further includes: The AnLF functional entity receives, from the MTLF functional entity, a request for ML model monitoring. The request for ML model monitoring carries the information about the first ML model. In response to the request for ML model monitoring, the AnLF functional entity sends information about a third data set to the MTLF functional entity. The third data set is used to store the related data of the first ML model.

Alternatively, in still another possible design solution, the method according to the first aspect further includes: The AnLF functional entity monitors analytics accuracy of the first ML model. When the analytics accuracy of the first ML model is insufficient, the AnLF functional entity sends a notification request message to the MTLF functional entity. The notification request message carries information about a third data set. The third data set is used to store the related data of the first ML model.

In a process of monitoring the accuracy of the first ML model, the AnLF functional entity may store the related data of the first ML model (for example, deviation data at a time which a prediction refers to) in the third data set, so that the MTLF functional entity can subsequently evaluate the first ML model, perform retraining, or newly generate an ML model based on data in the third data set. It can be learned that a correspondence between the first ML model and the third data set may be carried in the request for ML model monitoring, or may be carried in a response for ML model monitoring, or may be carried in the notification request message. That is, the AnLF functional entity or the MTLF functional entity may determine the third data set based on an actual situation, and send a correspondence between the related data of the first ML model and the third data set to the other party.

Optionally, the information about the third data set includes identification information of the third data set and/or identification information of a third ADRF functional entity. To be specific, when each data set is stored in one ADRF, a correspondence between a data set and the ADRF functional entity may be preset or predefined, so that only the correspondence between the third data set and the first ML model can be indicated. When there are multiple ADRFs, a correspondence between a data set and an ADRF functional entity may be indicated. For example, the identification information of the third data set and the identification information of the third ADRF functional entity are included in the request message, to indicate that the third data set is stored in the third ADRF functional entity. In this way, content contained in the information about the third data set may be flexibly set based on an actual situation.

In a possible design solution, the related data includes at least one of the following: input data, prediction data, ground truth data at a time which a prediction refers to, or deviation data at the time which the prediction refers to. The ground truth data of the ML model during prediction is an actual result of input data of the ML model, instead of a prediction result. The deviation data of the ML model at the time which the prediction refers to is deviated data of the prediction result. That is, the related data includes data generated when the ML model is used.

In a possible design solution, the AnLF functional entity is carried on a network data analytics function NWDAF network element, and/or the MTLF functional entity is carried on an NWDAF network element. It may be understood that the AnLF functional entity and the MTLF functional entity may be separately carried on different NWDAF network elements, or may be carried on a same NWDAF network element. This is not limited in embodiments of this application.

According to a second aspect, a communication method is provided. The method includes: A model training logical function MTLF functional entity sends information about a first machine learning ML model to an analytics logical function AnLF functional entity. The information about the first ML model is used to indicate the first ML model. The MTLF functional entity receives a first message from the AnLF functional entity. The first message carries the information about the first ML model and information about a first data set. The first data set is used to store related data of the first ML model.

In a possible design solution, the first ML model is multiple ML models, the information about the first ML model is information about the multiple ML models, the information about the first data set is information about multiple data sets, the multiple ML models are in one-to-one correspondence with the information about the multiple ML models, and the information about the multiple ML models is in one-to-one correspondence with the information about the multiple data sets.

In a possible design solution, the information about the first ML model is any one of the following: identification information of the first ML model, a uniform resource locator URL address of the first ML model, or a fully qualified domain name FQDN of the first ML model.

In a possible design solution, the information about the first data set includes identification information of the first data set and/or identification information of a first analytics data repository function ADRF functional entity.

In a possible design solution, before the MTLF functional entity sends the information about the first ML model to the AnLF functional entity, the method according to the second aspect further includes: The MTLF functional entity receives a request message from the AnLF functional entity. The request message is used to request an ML model. Correspondingly, that the MTLF functional entity sends the information about the first ML model to the AnLF functional entity includes: When receiving the request message, the MTLF functional entity sends the information about the first ML model to the AnLF functional entity.

In a possible design solution, before the MTLF functional entity sends the information about the first ML model to the AnLF functional entity, the method according to the second aspect further includes: The MTLF functional entity receives a request message from the AnLF functional entity. When receiving the request message, the MTLF functional entity sends information about a second ML model to the AnLF functional entity. The request message is used to request an ML model. The request message carries information about a second data set. The second data set is used to store related data of the ML model sent by the MTLF functional entity after the MTLF functional entity receives the request message. The information about the second ML model is used to fetch the second ML model.

Optionally, the information about the second data set includes identification information of the second data set and/or identification information of a second ADRF functional entity.

Optionally, the first ML model is an ML model retrained based on the second ML model, or the first ML model is a newly generated ML model.

Optionally, the method according to the second aspect further includes: The MTLF functional entity evaluates the second ML model based on the second data set. Because the second data set stores only related data of the second ML model, reliability of evaluating the second ML model can be improved by using the second data set to evaluate the second ML model.

In a possible design solution, the method according to the second aspect further includes: The MTLF functional entity evaluates the first ML model based on the first data set. Because the first data set stores only the related data of the first ML model, reliability of evaluating the first ML model can be improved by using the first data set to evaluate the first ML model.

In a possible design solution, the method according to the second aspect further includes: When the MTLF functional entity receives an ML model monitoring registration request, the MTLF functional entity sends, to the AnLF functional entity, a request for ML model monitoring. The request for ML model monitoring carries the information about the first ML model and information about a third data set. The third data set is used to store the related data of the first ML model.

Alternatively, in another possible design solution, the method according to the second aspect further includes: The MTLF functional entity receives information about a third data set from the AnLF functional entity. The third data set is used to store the related data of the first ML model.

Optionally, the information about the third data set is carried in a response for ML model monitoring and/or a notification request message.

Optionally, the information about the third data set includes identification information of the third data set and/or identification information of a third ADRF functional entity.

In a possible design solution, the related data includes at least one of the following: input data, prediction data, ground truth data at a time which a prediction refers to, or deviation data at the time which the prediction refers to.

In a possible design solution, the AnLF functional entity is carried on a network data analytics function NWDAF network element, and/or the MTLF functional entity is carried on an NWDAF network element.

In addition, for other technical effects of the method according to the second aspect, refer to the technical effects of the method according to the first aspect. Details are not described herein again.

According to a third aspect, a communication method is provided. The method includes: A model training logical function MTLF functional entity receives a request message from an analytics logical function AnLF functional entity, and sends a first message to the AnLF functional entity. The request message is used to request a machine learning ML model. The first message carries information about a first ML model and information about a first data set. The information about the first ML model is used to indicate the first ML model. The first data set is used to store related data of the first ML model.

It can be learned from the method according to the third aspect that, in a large-scale scenario, related data of each ML model (for example, data generated in a process of using the ML model) is usually stored in a same data set. In the data set, it is impossible to distinguish a specific ML model to which each piece of data belongs. Therefore, the MTLF functional entity usually evaluates each ML model based on all data in the data set. However, in this manner, evaluation reliability is not high. Therefore, data of different ML models may be stored in different data sets respectively, and reliability of evaluating an ML model is improved by using data in a data set corresponding to the ML model. For example, after receiving the request message that is from the AnLF functional entity and that is used to request the ML model, the MTLF functional entity may set the related data of the first ML model to be stored in the first data set, that is, set a correspondence between the first ML model and the first data set, and deliver the first ML model and the correspondence to the AnLF functional entity by including the information about the first ML model and the information about the first data set in the first message, so that the AnLF functional entity can obtain the first ML model based on the information about the first ML model, and store related information of the first ML model in the first data set based on the correspondence. Further, the MTLF functional entity may obtain the related data of the first ML model from the first data set, to evaluate the first ML model based on the related data, so as to improve reliability of evaluating the first ML model.

In a possible design solution, the first ML model is multiple ML models, the information about the first ML model is information about the multiple ML models, the information about the first data set is information about multiple data sets, the multiple ML models are in one-to-one correspondence with the information about the multiple ML models, and the information about the multiple ML models is in one-to-one correspondence with the information about the multiple data sets. In other words, when the MTLF functional entity sends the multiple ML models to the AnLF functional entity, the AnLF functional entity may set a correspondence between the multiple ML models and the multiple data sets, and send the correspondence to the MTLF functional entity, so that the MTLF functional entity fetches a data set corresponding to any one of the multiple ML models, and evaluates the ML model, to improve reliability of evaluating the ML model.

In a possible design solution, the information about the first ML model is any one of the following: identification information of the first ML model, a uniform resource locator URL address of the first ML model, or a fully qualified domain name FQDN of the first ML model. That is, the first ML model may be accurately indicated by including the information, to ensure that the MTLF functional entity successfully obtains the correspondence between the first ML model and the first data set.

In a possible design solution, the information about the first data set includes identification information of the first data set and/or identification information of a first analytics data repository function ADRF functional entity. To be specific, when each data set is stored in one ADRF, a correspondence between a data set and the ADRF functional entity may be preset or predefined, so that only the correspondence between the first data set and the first ML model can be indicated. When there are multiple ADRFs, a correspondence between a data set and an ADRF functional entity may be indicated. For example, the identification information of the first data set and the identification information of the first ADRF functional entity are included in the first message, to indicate that the first data set is stored in the first ADRF functional entity. In this way, content contained in the information about the first data set may be flexibly set based on an actual situation.

In a possible design solution, the method according to the third aspect further includes: The MTLF functional entity sends, to the first ADRF functional entity, a request for creating the first data set in the first ADRF functional entity. In this way, the MTLF functional entity may set the correspondence between the first ML model and the first data set.

In a possible design solution, the method according to the third aspect further includes: The MTLF functional entity evaluates the first ML model based on the first data set. Because the first data set stores only the related data of the first ML model, reliability of evaluating the first ML model can be improved by using the first data set to evaluate the first ML model.

In a possible design solution, the method according to the third aspect further includes: When the MTLF functional entity receives an ML model monitoring registration request, the MTLF functional entity sends, to the AnLF functional entity, a request for ML model monitoring. The request for ML model monitoring carries the information about the first ML model and information about a third data set. The third data set is used to store the related data of the first ML model.

Alternatively, in another possible design solution, the method according to the third aspect further includes: The MTLF functional entity receives information about a third data set from the AnLF functional entity. The third data set is used to store the related data of the first ML model.

In a process of monitoring accuracy of the first ML model, the AnLF functional entity may store the related data of the first ML model in the third data set, so that the MTLF functional entity can subsequently evaluate the first ML model, perform retraining, or newly generate an ML model based on data in the third data set. It can be learned that a correspondence between the first ML model and the third data set may be carried in the request for ML model monitoring, or may be sent by the AnLF functional entity to the MTLF functional entity. That is, the AnLF functional entity or the MTLF functional entity may determine the third data set based on an actual situation, and send a correspondence between the related data of the first ML model and the third data set to the other party.

Optionally, the information about the third data set is carried in a response for ML model monitoring and/or a notification request message. That is, the AnLF functional entity may send the correspondence between the first ML model and the third data set to the MTLF functional entity at different stages of monitoring the accuracy of the first ML model. In this way, time for sending the correspondence may be flexibly set.

Optionally, the information about the third data set includes identification information of the third data set and/or identification information of a third ADRF functional entity. To be specific, when each data set is stored in one ADRF, a correspondence between a data set and the ADRF functional entity may be preset or predefined, so that only the correspondence between the third data set and the first ML model can be indicated. When there are multiple ADRFs, a correspondence between a data set and an ADRF functional entity may be indicated. For example, the identification information of the third data set and the identification information of the third ADRF functional entity are included in the request message, to indicate that the third data set is stored in the third ADRF functional entity. In this way, content contained in the information about the third data set may be flexibly set based on an actual situation.

In a possible design solution, the related data includes at least one of the following: input data, prediction data, ground truth data at a time which a prediction refers to, or deviation data at the time which the prediction refers to. The ground truth data of the ML model during prediction is an actual result of input data of the ML model, instead of a prediction result. The deviation data of the ML model at the time which the prediction refers to is deviated data of the prediction result. That is, the related data includes data generated when the ML model is used.

In a possible design solution, the AnLF functional entity is carried on a network data analytics function NWDAF network element, and/or the MTLF functional entity is carried on an NWDAF network element. It may be understood that the AnLF functional entity and the MTLF functional entity may be separately carried on different NWDAF network elements, or may be carried on a same NWDAF network element. This is not limited in embodiments of this application.

According to a fourth aspect, a communication method is provided. The method includes: An analytics logical function AnLF functional entity sends a request message to a model training logical function MTLF functional entity, and receives a first message from the MTLF functional entity. The request message is used to request a machine learning ML model. The first message carries information about a first ML model and information about a first data set. The information about the first ML model is used to fetch the first ML model. The first data set is used to store related data of the first ML model.

In a possible design solution, the first ML model is multiple ML models, the information about the first ML model is information about the multiple ML models, the information about the first data set is information about multiple data sets, the multiple ML models are in one-to-one correspondence with the information about the multiple ML models, and the information about the multiple ML models is in one-to-one correspondence with the information about the multiple data sets.

In a possible design solution, the information about the first ML model is any one of the following: identification information of the first ML model, a uniform resource locator URL address of the first ML model, or a fully qualified domain name FQDN of the first ML model.

In a possible design solution, the information about the first data set includes identification information of the first data set and/or identification information of a first analytics data repository function ADRF functional entity.

In a possible design solution, the method according to the fourth aspect further includes: The AnLF functional entity sends the related data of the first ML model and the information about the first data set to the first ADRF functional entity based on the information about the first data set. In this way, the first ADRF functional entity may accurately store the related data of the first ML model in the first data set based on the information about the first data set.

In a possible design solution, the method according to the fourth aspect further includes: The AnLF functional entity receives, from the MTLF functional entity, a request for ML model monitoring. The request for ML model monitoring carries the information about the first ML model and information about a third data set. The third data set is used to store the related data of the first ML model.

Alternatively, in another possible design solution, the method according to the fourth aspect further includes: The AnLF functional entity receives, from the MTLF functional entity, a request for ML model monitoring. The request for ML model monitoring carries the information about the first ML model. In response to the request for ML model monitoring, the AnLF functional entity sends information about a third data set to the MTLF functional entity. The third data set is used to store the related data of the first ML model.

Alternatively, in still another possible design solution, the method according to the fourth aspect further includes: The AnLF functional entity monitors analytics accuracy of the first ML model. When the analytics accuracy of the first ML model is insufficient, the AnLF functional entity sends a notification request message to the MTLF functional entity. The notification request message carries information about a third data set. The third data set is used to store the related data of the first ML model.

Optionally, the information about the third data set includes identification information of the third data set and/or identification information of a third ADRF functional entity.

In a possible design solution, the related data includes at least one of the following: input data, prediction data, ground truth data at a time which a prediction refers to, or deviation data at the time which the prediction refers to.

In a possible design solution, the AnLF functional entity is carried on a network data analytics function NWDAF network element, and/or the MTLF functional entity is carried on an NWDAF network element.

In addition, for other technical effects of the method according to the fourth aspect, refer to the technical effects of the method according to the third aspect. Details are not described herein again.

According to a fifth aspect, a communication method is provided. The method includes: A model training logical function MTLF functional entity receives a request message from an analytics logical function AnLF functional entity. The MTLF functional entity sends, to an analytics data repository function ADRF functional entity, a request for fetching related data of a first ML model, and receives the related data of the first ML model from the ADRF functional entity. The request message carries information about a first data set. The first data set is used to store related data of multiple ML models. The multiple ML models include the first ML model. The request for fetching the related data of the first ML model carries information about the first ML model and the information about the first data set.

It can be learned from the method according to the first aspect that, in a large-scale scenario, related data of each ML model (for example, data generated in a process of using the ML model) is usually stored in a same data set. In the data set, it is impossible to distinguish a specific ML model to which each piece of data belongs. Therefore, the MTLF functional entity usually evaluates each ML model based on all data in the data set. However, in this manner, evaluation reliability is not high. Therefore, data of different ML models may be marked with corresponding model tags, and stored in a same data set. Reliability of evaluating an ML model can be improved by using data with a model tag corresponding to the ML model. For example, the MTLF functional entity may fetch a data set tag from the received request message, that is, know that data of each ML model is stored in a data set corresponding to the data set tag. Then, the MTLF functional entity sends, to the ADRF functional entity, the request for fetching the related data of the first ML model, where the request carries the information about the first ML model and the information about the first data set, so that the ADRF functional entity can obtain, from content stored in the ADRF functional entity, related data that is in the first data set and that carries the information about the first ML model, and send the related data to the MTLF functional entity. In this way, the MTLF functional entity evaluates the first ML model based on the related data, to improve reliability of evaluating the first ML model.

In a possible design solution, the information about the first ML model is any one of the following: identification information of the first ML model, a uniform resource locator URL address of the first ML model, or a fully qualified domain name FQDN of the first ML model. That is, the first ML model may be accurately indicated by including the information, to ensure that the MTLF functional entity successfully obtains the correspondence between the first ML model and the first data set.

In a possible design solution, the information about the first data set includes identification information of the first data set and/or identification information of a first analytics data repository function ADRF functional entity. To be specific, when each data set is stored in one ADRF, a correspondence between a data set and the ADRF functional entity may be preset or predefined, so that only the correspondence between the first data set and the first ML model can be indicated. When there are multiple ADRFs, a correspondence between a data set and an ADRF functional entity may be indicated. For example, the identification information of the first data set and the identification information of the first ADRF functional entity are included in the first message, to indicate that the first data set is stored in the first ADRF functional entity. In this way, content contained in the information about the first data set may be flexibly set based on an actual situation.

In a possible design solution, the method according to the fifth aspect further includes: The MTLF functional entity sends a first message to the AnLF functional entity. The first message carries the information about the first ML model. The information about the first ML model is used to indicate the first ML model. In this way, the AnLF functional entity may obtain the first ML model based on the information about the first ML model.

In a possible design solution, the method according to the fifth aspect further includes: The MTLF functional entity performs retraining or newly generates a second ML model based on the related data of the first ML model.

Optionally, the method according to the fifth aspect further includes: The MTLF functional entity sends information about the second ML model to the AnLF functional entity. The information about the second ML model is used to indicate the second ML model. To be specific, after performing retraining or newly generating the second ML model, the MTLF functional entity may send the second ML model to the AnLF functional entity, so that the AnLF functional entity can update a used ML model, that is, use a latest ML model, so that accuracy of ML model prediction can be improved.

In a possible design solution, the method according to the fifth aspect further includes: When the MTLF functional entity receives an ML model monitoring registration request, the MTLF functional entity sends, to the AnLF functional entity, a request for ML model monitoring. The request for ML model monitoring carries the information about the first ML model and information about a third data set. The third data set is used to store the related data of the first ML model.

Alternatively, in another possible design solution, the method according to the fifth aspect further includes: The MTLF functional entity receives information about a third data set from the AnLF functional entity. The third data set is used to store the related data of the first ML model.

In a process of monitoring accuracy of the first ML model, the AnLF functional entity may store the related data of the first ML model in the third data set, so that the MTLF functional entity can subsequently evaluate the first ML model, perform retraining, or newly generate an ML model based on data in the third data set. It can be learned that a correspondence between the first ML model and the third data set may be carried in the request for ML model monitoring, or may be sent by the AnLF functional entity to the MTLF functional entity. That is, the AnLF functional entity or the MTLF functional entity may determine the third data set based on an actual situation, and send a correspondence between the related data of the first ML model and the third data set to the other party.

Optionally, the information about the third data set is carried in a response for ML model monitoring and/or a notification request message. That is, the AnLF functional entity may send the correspondence between the first ML model and the third data set to the MTLF functional entity at different stages of monitoring the accuracy of the first ML model. In this way, time for sending the correspondence may be flexibly set.

Optionally, the information about the third data set includes identification information of the third data set and/or identification information of a third ADRF functional entity. To be specific, when each data set is stored in one ADRF, a correspondence between a data set and the ADRF functional entity may be preset or predefined, so that only the correspondence between the third data set and the first ML model can be indicated. When there are multiple ADRFs, a correspondence between a data set and an ADRF functional entity may be indicated. For example, the identification information of the third data set and the identification information of the third ADRF functional entity are included in the request message, to indicate that the third data set is stored in the third ADRF functional entity. In this way, content contained in the information about the third data set may be flexibly set based on an actual situation.

In a possible design solution, the related data includes at least one of the following: input data, prediction data, ground truth data at a time which a prediction refers to, or deviation data at the time which the prediction refers to. The ground truth data of the ML model during prediction is an actual result of input data of the ML model, instead of a prediction result. The deviation data of the ML model at the time which the prediction refers to is deviated data of the prediction result. That is, the related data includes data generated when the ML model is used.

In a possible design solution, the AnLF functional entity is carried on a network data analytics function NWDAF network element, and/or the MTLF functional entity is carried on an NWDAF network element. It may be understood that the AnLF functional entity and the MTLF functional entity may be separately carried on different NWDAF network elements, or may be carried on a same NWDAF network element. This is not limited in embodiments of this application.

According to a sixth aspect, a communication method is provided. The method includes: An analytics data repository function ADRF functional entity receives related data of a first machine learning ML model, information about the first ML model, and information about a first data set from an analytics logical function AnLF functional entity; and stores the related data of the first ML model based on the information about the first ML model and the information about the first data set. The first data set is used to store the related data of the first ML model.

In a possible design solution, the information about the first ML model is any one of the following: identification information of the first ML model, a uniform resource locator URL address of the first ML model, or a fully qualified domain name FQDN of the first ML model.

In a possible design solution, the information about the first data set includes identification information of the first data set and/or identification information of a first analytics data repository function ADRF functional entity.

In a possible design solution, the method according to the sixth aspect further includes: The ADRF functional entity receives, from a model training logical function MTLF functional entity, a request for fetching the related data of the first ML model. The request for fetching the related data of the first ML model includes the information about the first ML model and the information about the first data set. The ADRF functional entity sends the related data of the first ML model to the MTLF functional entity based on the information about the first ML model and the information about the first data set.

In a possible design solution, the related data includes at least one of the following: input data, prediction data, ground truth data at a time which a prediction refers to, or deviation data at the time which the prediction refers to.

In a possible design solution, the AnLF functional entity is carried on a network data analytics function NWDAF network element, and/or the MTLF functional entity is carried on an NWDAF network element.

In addition, for other technical effects of the method according to the sixth aspect, refer to the technical effects of the method according to the fifth aspect. Details are not described herein again.

According to a seventh aspect, a communication method is provided. The method includes: An analytics logical function AnLF functional entity receives a first message from a model training logical function MTLF functional entity, and sends related data of a first ML model, information about the first ML model, and information about a first data set to an analytics data repository function ADRF functional entity. The first message carries the information about the first ML model. The information about the first ML model is used to fetch the first ML model. The first data set is used to store related data of multiple ML models. The multiple ML models include the first ML model.

In a possible design solution, the information about the first ML model is any one of the following: identification information of the first ML model, a uniform resource locator URL address of the first ML model, or a fully qualified domain name FQDN of the first ML model.

In a possible design solution, the information about the first data set includes identification information of the first data set and/or identification information of a first analytics data repository function ADRF functional entity.

In a possible design solution, the method according to the seventh aspect further includes: The AnLF functional entity creates the first data set. To be specific, the AnLF functional entity may send, to the ADRF functional entity, a request for creating the first data set in the ADRF functional entity, to create the first data set.

In a possible design solution, the method according to the seventh aspect further includes: The AnLF functional entity receives, from the MTLF functional entity, a request for ML model monitoring. The request for ML model monitoring carries the information about the first ML model and information about a third data set. The third data set is used to store the related data of the first ML model.

Alternatively, in another possible design solution, the method according to the seventh aspect further includes: The AnLF functional entity receives, from the MTLF functional entity, a request for ML model monitoring. The request for ML model monitoring carries the information about the first ML model. In response to the request for ML model monitoring, the AnLF functional entity sends information about a third data set to the MTLF functional entity. The third data set is used to store the related data of the first ML model.

Alternatively, in still another possible design solution, the method according to the seventh aspect further includes: The AnLF functional entity monitors analytics accuracy of the first ML model. When the analytics accuracy of the first ML model is insufficient, the AnLF functional entity sends a notification request message to the MTLF functional entity. The notification request message carries information about a third data set. The third data set is used to store the related data of the first ML model.

Optionally, the information about the third data set includes identification information of the third data set and/or identification information of a third ADRF functional entity.

In a possible design solution, the related data includes at least one of the following: input data, prediction data, ground truth data at a time which a prediction refers to, or deviation data at the time which the prediction refers to.

In a possible design solution, the AnLF functional entity is carried on a network data analytics function NWDAF network element, and/or the MTLF functional entity is carried on an NWDAF network element.

In addition, for other technical effects of the method according to the seventh aspect, refer to the technical effects of the method according to the fifth aspect. Details are not described herein again.

According to an eighth aspect, a communication apparatus is provided. The communication apparatus includes a module configured to perform the method according to any one of the possible implementations of the first aspect to the seventh aspect, for example, a transceiver module and a processing module. For example, the transceiver module is configured to indicate receiving and sending functions of the communication apparatus, and the processing module is configured to perform a function of the communication apparatus other than the receiving and sending functions.

Optionally, the transceiver module may include a sending module and a receiving module. The sending module is configured to implement the sending function of the communication apparatus according to the eighth aspect, and the receiving module is configured to implement the receiving function of the communication apparatus according to the eighth aspect.

Optionally, the communication apparatus according to the eighth aspect may further include a storage module. The storage module stores a program or instructions. When the processing module executes the program or the instructions, the communication apparatus is caused to perform the method according to any one of the possible implementations of the first aspect to the seventh aspect.

It may be understood that the communication apparatus according to the eighth aspect may be a network device, or may be a chip (system) or another part or component that may be disposed in the network device, or may be an apparatus containing the network device. This is not limited in this application.

In addition, for technical effects of the communication apparatus according to the eighth aspect, refer to the technical effects of the method according to any one of the possible implementations of the first aspect to the seventh aspect. Details are not described herein again.

According to a ninth aspect, a communication apparatus is provided. The communication apparatus includes a processor. The processor is configured to perform the method according to any one of the possible implementations of the first aspect to the fifth aspect.

In a possible design solution, the communication apparatus according to the ninth aspect may further include a transceiver. The transceiver may be a transceiver circuit or an interface circuit. The transceiver may be used by the communication apparatus according to the ninth aspect to communicate with another communication apparatus.

In a possible design solution, the communication apparatus according to the ninth aspect may further include a memory. The memory and the processor may be integrated together, or may be disposed separately. The memory may be configured to store a computer program and/or data related to the method according to any one of the possible implementations of the first aspect to the seventh aspect.

In this embodiment of this application, the communication apparatus according to the ninth aspect may be a terminal device or a network device, or may be a chip (system) or another part or component that may be disposed in the terminal device or the network device, or may be an apparatus containing the terminal device or the network device.

In addition, for technical effects of the communication apparatus according to the ninth aspect, refer to the technical effects of the method according to any one of the possible implementations of the first aspect to the seventh aspect. Details are not described herein again.

According to a tenth aspect, a communication apparatus is provided. The communication apparatus includes a processor. The processor is coupled to a memory. The processor is configured to execute a computer program stored in the memory, to cause the communication apparatus to perform the method according to any one of the possible implementations of the first aspect to the seventh aspect.

In a possible design solution, the communication apparatus according to the tenth aspect may further include a transceiver. The transceiver may be a transceiver circuit or an interface circuit. The transceiver may be used by the communication apparatus according to the tenth aspect to communicate with another communication apparatus.

In this embodiment of this application, the communication apparatus according to the tenth aspect may be a terminal device or a network device, or may be a chip (system) or another part or component that may be disposed in the terminal device or the network device, or may be an apparatus containing the terminal device or the network device.

In addition, for technical effects of the communication apparatus according to the tenth aspect, refer to the technical effects of the method according to any one of the possible implementations of the first aspect to the seventh aspect. Details are not described herein again.

According to an eleventh aspect, a communication apparatus is provided, and includes a processor and a memory. The memory is configured to store a computer program. When the processor executes the computer program, the communication apparatus is caused to perform the method according to any one of the possible implementations of the first aspect to the seventh aspect.

In a possible design solution, the communication apparatus according to the eleventh aspect may further include a transceiver. The transceiver may be a transceiver circuit or an interface circuit. The transceiver may be used by the communication apparatus according to the eleventh aspect to communicate with another communication apparatus.

In this embodiment of this application, the communication apparatus according to the eleventh aspect may be a terminal device or a network device, or may be a chip (system) or another part or component that may be disposed in the terminal device or the network device, or may be an apparatus containing the terminal device or the network device.

In addition, for technical effects of the communication apparatus according to the eleventh aspect, refer to the technical effects of the method according to any one of the possible implementations of the first aspect to the seventh aspect. Details are not described herein again.

According to a twelfth aspect, a communication system is provided. The communication includes an analytics logical function AnLF functional entity, a model training logical function MTLF functional entity, and an analytics data repository function ADRF functional entity network element. The AnLF functional entity is configured to perform the method according to any one of the implementations of the first aspect, the fourth aspect, or the seventh aspect. The MTLF functional entity is configured to perform the method according to any one of the implementations of the second aspect, the third aspect, or the fifth aspect. The ADRF functional entity network element is configured to perform the method according to the sixth aspect.

According to a thirteenth aspect, a communication chip is provided. The communication chip stores instructions. When the chip runs on a communication device, the method according to any one of the implementations of the first aspect to the seventh aspect is implemented.

According to a fourteenth aspect, a computer-readable storage medium is provided, and includes a computer program or instructions. When the computer program or the instructions are run on a computer, the computer is caused to perform the method according to any one of the possible implementations of the first aspect to the fifth aspect.

According to a fifteenth aspect, a computer program product is provided, and includes a computer program or instructions. When the computer program or the instructions are run on a computer, the computer is caused to perform the method according to any one of the possible implementations of the first aspect to the fifth aspect.

### BRIEF DESCRIPTION OF DRAWINGS

FIG. 1 is a diagram of an architecture of a 5th generation mobile communication system 5GS according to an embodiment of this application;
FIG. 2A and FIG. 2B are a schematic flowchart for model training logical function MTLF-based machine learning ML model accuracy monitoring according to an embodiment of this application;
FIG. 3 is a schematic flowchart for monitoring analytics accuracy of an ML model according to an embodiment of this application;
FIG. 4 is a diagram of an architecture of a communication system according to an embodiment of this application;
FIG. 5 is a schematic flowchart 1 of a communication method according to an embodiment of this application;
FIG. 6 is a schematic flowchart 2 of a communication method according to an embodiment of this application;
FIG. 7 is a schematic flowchart 3 of a communication method according to an embodiment of this application;
FIG. 8 is a schematic flowchart 4 of a communication method according to an embodiment of this application;
FIG. 9 is a schematic flowchart 5 of a communication method according to an embodiment of this application;
FIG. 10 is a diagram 1 of a structure of a communication apparatus according to an embodiment of this application; and
FIG. 11 is a diagram 2 of a structure of a communication apparatus according to an embodiment of this application.

### DESCRIPTION OF EMBODIMENTS

For ease of understanding, the following first describes technical terms in embodiments of this application.
1. 5th generation (5th generation, 5G) mobile communication system (referred to as a 5G system (5G system, 5GS) for short):

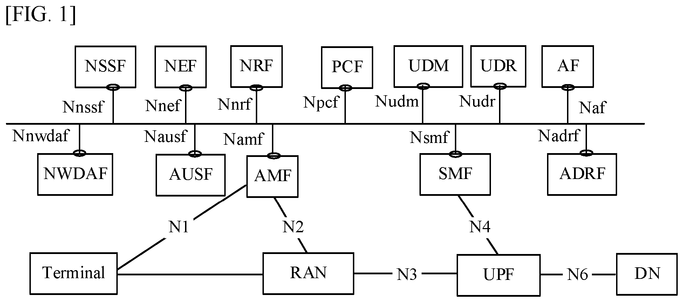

   FIG. 1 is a diagram of an architecture of a 5GS. As shown in FIG. 1, the 5GS includes an access network (access network, AN) and a core network (core network, CN), and may further include a terminal device.

The terminal device may be a terminal device having receiving and sending functions, or may be a chip or a chip system that may be disposed in the terminal device. The terminal device may also be referred to as user equipment (user equipment, UE), an access terminal, a subscriber unit (subscriber unit), a subscriber station, a mobile station (mobile station, MS), a mobile console, a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a terminal function, or the like. The terminal device in this application may alternatively be a vehicle-mounted module, a vehicle-mounted assembly, a vehicle-mounted part, a vehicle-mounted chip, or a vehicle-mounted unit that is built in a vehicle as one or more parts or units.

The foregoing AN is configured to implement an access-related function, may provide a network access function for an authorized user in a specific area, and can determine transmission links with different quality based on a user level, a service requirement, and the like, to perform transmission of user data. The AN forwards a control signal and the user data between the terminal and the CN. The AN may include an access network device, which may also be referred to as a radio access network (radio access network, RAN) device. The CN is mainly responsible for maintaining subscription data of a mobile network, and provides functions such as session management, mobility management, policy management, and security authentication for the terminal device. The CN mainly includes the following: a user plane function (user plane function, UPF), an authentication server function (authentication server function, AUSF), an access and mobility management function (access and mobility management function, AMF), a session management function (session management function, SMF), a network slice selection function (network slice selection function, NSSF), a network exposure function (network exposure function, NEF), a network repository function (network repository function, NRF), a policy control function (policy control function, PCF), unified data management (unified data management, UDM), unified data repository (unified data repository, UDR), an application function (application function, AF), a network data analytics function (network data analytics function, NWDAF), and an analytics data repository function (analytics data repository function, ADRF).

As shown in FIG. 1, the UE accesses a 5G network via the RAN device. The UE communicates with the AMF through an N1 interface (N1 for short). The RAN communicates with the AMF through an N2 interface (N2 for short). The RAN communicates with the UPF through an N3 interface (N3 for short). The SMF communicates with the UPF through an N4 interface (N4 for short). The UPF accesses a data network (data network, DN) through an N6 interface (N6 for short). In addition, control plane functions such as the AUSF, the AMF, the SMF, the NSSF, the NEF, the NRF, the PCF, the UDM, the UDR, the AF, the NWDAF, and the ADRF shown in FIG. 1 interact with each other through service-based interfaces. For example, a service-based interface exhibited by the AUSF includes Nausf, a service-based interface exhibited by the AMF includes Namf, a service-based interface exhibited by the SMF includes Nsmf, a service-based interface exhibited by the NSSF includes Nnssf, a service-based interface exhibited by the NEF includes Nnef, a service-based interface exhibited by the NRF includes Nnrf, a service-based interface exhibited by the PCF includes Npcf, a service-based interface exhibited by the UDM includes Nudm, a service-based interface exhibited by the UDR includes Nudr, a service-based interface exhibited by the AF includes Naf, a service-based interface exhibited by the NWDAF includes Nnwdaf, and a service-based interface exhibited by the ADRF includes Nadrf.

The RAN device may be a device that provides access for the terminal device. For example, the RAN device may include an access network device in a next generation mobile communication system like 6G, for example, a 6G base station. Alternatively, in the next generation mobile communication system, the network device may be named in another manner, which falls within the protection scope of embodiments of this application. This is not limited in this application. Alternatively, the RAN device may further include a gNB in 5G, for example, a new radio (new radio, NR) system, or one antenna panel or a group of antenna panels (including multiple antenna panels) of a base station in 5G, or may be a network node that forms a gNB, a transmission point (transmission reception point, TRP, or transmission point, TP), or a transmission measurement function (transmission measurement function, TMF), for example, a baseband unit (building baseband unit, BBU), a central unit (central unit, CU), or a distributed unit (distributed unit, DU), an RSU having a base station function, a wired access gateway, or a 5G core network. Alternatively, the RAN device may further include an access point (access point, AP), a wireless relay node, a wireless backhaul node, macro base stations in various forms, a micro base station (also referred to as a small cell), a relay station, an access point, a wearable device, a vehicle-mounted device, and the like in a wireless fidelity (wireless fidelity, Wi-Fi) system.

The UPF is mainly responsible for user data handling (forwarding, receiving, charging, and the like).

The AUSF is mainly configured for security authentication of the terminal device.

The AMF is mainly configured for mobility management in the mobile network, for example, user location update, registration of a user with a network, and user handover.

The SMF is mainly configured for session management in the mobile network, for example, session establishment, modification, and release. Specific functions are, for example, allocation of an internet protocol (internet protocol, IP) address to the user, and selection of a UPF that provides a data packet forwarding function.

The PCF mainly supports a unified policy framework to govern network behavior, provides policy rules to a control plane function, and is responsible for accessing subscription information relevant for policy decisions. The PCF may provide the AMF and the SMF with policies, for example, a quality of service (quality of service, QoS) policy and a slice selection policy.

The NSSF is mainly configured to select a network slice serving the terminal device.

The NEF is mainly configured to support exposure of capabilities and events. For example, the NEF may expose some capabilities of the 5G network to a third-party application through an application programming interface (application programming interface, API), and the third-party application obtains some capabilities of the 5G network by invoking, via the AF, the API provided by the NEF, so that the third-party application can control behavior of the 5G network and the terminal device.

The UDM is mainly configured to store user data, for example, subscription data and authentication/authorization data.

The UDR is mainly configured to store structured data. Stored content includes subscription data, policy data, structured data for exposure, and application-related data.

The AF mainly supports interaction with the CN to provide services, for example, influence on data routing decision-making, a policy control function, or provision of some third-party services for a network side.

The NWDAF network element supports data collection from other network functions and AF network elements, support data collection from an operation, administration, and maintenance (operation, administration, and maintenance, OAM) network element, and support analytics data provisioning to the other network functions and AF network elements. To be specific, the NWDAF network element has functions of data collection, model training, data analytics, and model inference, that is, the NWDAF network element may be configured to: collect related data from a network element, a third-party service server, the terminal device, or a network management system; perform data analytics based on the related data to obtain an analytics result; and provide the analytics result for the network element, the third-party service server, the terminal device, or the network management system. The analytics result may assist a network in selecting a quality of service parameter of a service, assist the network in performing traffic routing, assist the network in selecting a background data transfer policy, or the like. In addition, the NWDAF network element may further collect the related data from the network element, the third-party service server, the terminal device, or the network management system, perform model training based on the related data to obtain an AI model or an ML model, and provide the AI model or the ML model for another NWDAF network element. The AI model or the ML model may be used to assist the NWDAF network element in generating the data analytics result based on the related data.

An NWDAF containing an AnLF may be configured to: perform model inference, export analytics information, to be specific, export statistics information and/or predictions based on an analytics consumer request, and expose an analytics service. An NWDAF containing an MTLF may be configured to: train an ML model, and expose a new training service, for example, provide a trained ML model.

The ADRF network element may provide services for storage and retrieval of data and analytics for a consumer. For example, the consumer sends, to the ADRF network element, a data management storage request (Nadrf Data Management Storage Request) that contains to-be-stored data or analytics. Alternatively, the consumer sends a data management storage subscription request (Nadrf Data Management Storage Subscription Request) to the ADRF network element, to request the ADRF network element to subscribe to and receive data or analytics to be stored. Then, the ADRF network element subscribes to the NWDAF network element or a data collection coordination function (data collection coordination function, DCCF) network element to fetch the data or the analytics, and provides a notification address of the ADRF network element or a notification correlation identity (identity, ID). The analysis or the data is then provided as a notification via a DCCF data management (Ndccf_DataManagement) service, an NWDAF data management (Nnwdaf_DataManagement) service, or an MFAF (messaging framework adaptor NF) data management (Nmfaf_3caDataManagement) service.

It may be understood that the functions mentioned in embodiments of this application may alternatively be represented as functional network elements or functional entities. For example, the UPF may be represented as a UPF network element, the AMF may be represented as an AMF network element, the SMF may be represented as an SMF network element, the PCF may be represented as a PCF network element, and the like. This is not limited.

2. Procedure for MTLF-based ML model accuracy monitoring:

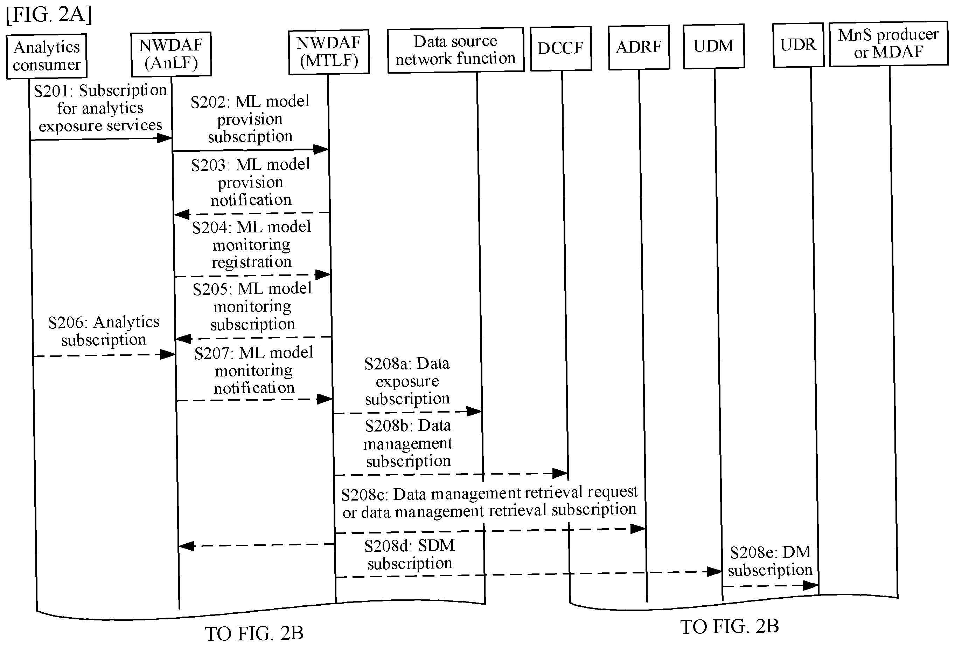

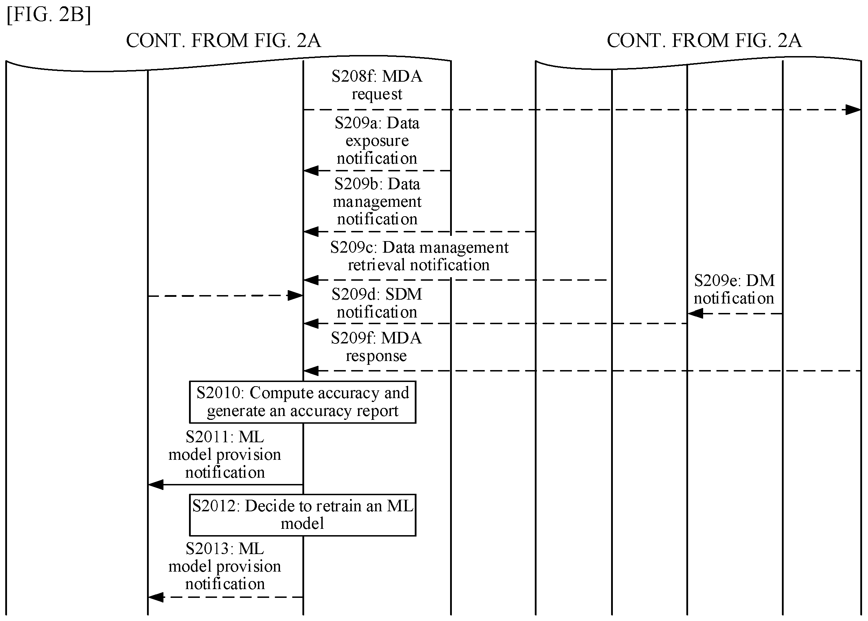

FIG. 2A and FIG. 2B illustrate a procedure for monitoring accuracy of a configured ML model using newly collected data. An NWDAF containing an AnLF may provide inference data to an NWDAF containing the MTLF for model accuracy monitoring, and the NWDAF containing the MTLF determines retraining or re-provisioning of the ML model. The procedure for MTLF-based ML model accuracy monitoring is specifically described below.

S201: An analytics consumer (analytics consumer) initiates a subscription for analytics exposure services (Nnwdaf_AnalyticsSubscription_subscribe) service operation towards the NWDAF containing the AnLF.

S202: The NWDAF containing the AnLF requests an ML Model from the NWDAF containing the MTLF, using an ML model provision subscription (Nnwdaf_MLModelProvision_Subscribe) service operation.

The NWDAF containing the AnLF may include an analytics accuracy threshold, which is used as an indicator to execute an accuracy monitoring operation. The NWDAF containing the AnLF may include a data set tag (DataSetTag) and/or an ADRF ID, which are/is used to store inference data and fetch the inference data from the ADRF. The inference data is related to the accuracy monitoring and retraining or re-provisioning of the ML model. The inference data may include input data, prediction data, and ground truth data at a time which a prediction refers to.

S203: The NWDAF containing the MTLF provides a trained ML model to the NWDAF containing the AnLF.

The NWDAF containing the MTLF may include accuracy information. The accuracy information is used to indicate accuracy of the ML model during training. The NWDAF containing the MTLF may send the ML model to the NWDAF containing the AnLF, using an ML model provision notification (Nnwdaf_MLModelProvision_Notify) service operation.

S204: The NWDAF containing the AnLF registers use of the ML model with the NWDAF containing the MTLF to indicate its capability of sending analytics feedback information and/or ML model accuracy information from the analytics consumer.

The NWDAF containing the AnLF may register the use of the ML model with the NWDAF containing the MTLF, using an ML model monitoring registration (Nnwdaf_MLModelMonitor_Register) service operation.

S205: Due to the registration in the previous step, the NWDAF containing the MTLF may subscribe to the NWDAF containing the AnLF to get the analytics feedback information and/or ML model accuracy information from the analytics consumer by invoking an ML model monitoring subscription (Nnwdaf_MLModelMonitor_Subscribe) service operation, if the service operation is supported by the NWDAF containing the AnLF.

S206: The Analytics consumer may send the analytics feedback information in an analytics subscription (Nnwdaf_AnalyticsSubscription_Subscribe) message as described in clause 6.1.1.

S207: The NWDAF containing the AnLF may send the analytics feedback information and/or ML model accuracy information received from the analytics consumer by invoking an ML model monitoring notification (Nnwdaf_MLModelMonitor_Notify) service operation as requested in S205. When the NWDAF containing the MTLF receives the analytics feedback information or the ML model accuracy information, the NWDAF containing the MTLF may trigger step S208 to S2013 to enhance the ML model accuracy.

S208a to S208f: The NWDAF containing the MTLF determines, based on a request from one or more NWDAFs containing the AnLF or a local policy thereof, whether to perform ML model accuracy monitoring and retraining/re-provisioning of the ML model by collecting new data from various data sources:
(1) The NWDAF containing the MTLF may collect new data for ML model accuracy monitoring, retraining, and re-provisioning from the data sources NFs and DCCF by invoking event exposure subscription (Nnf_EventExposure_Subscribe) and data management subscription (Ndccf_DataManagement_Subscribe) service operations respectively.
(2) When the ADRF ID and/or the DataSetTag are/is given by S202, the NWDAF containing the MTLF may retrieve historical data from the ADRF indicated by the NWDAF containing the AnLF in S202, by invoking a data management retrieval request (Nadrf_DataManagementRetrievalRequest) or data management retrieval subscription (Nadrf_DataManagementRetrieval_Subscribe) service operation. Otherwise, the NWDAF containing the MTLF may retrieve the historical data from the DCCF or the NWDAF containing the AnLF by invoking a DCCF data management subscription (Ndccf_DataManagement_Subscribe) service operation or an NWDAF data management subscription (Nnwdaf_DataManagement_Subscribe) service operation respectively.
(3) If the NWDAF containing the AnLF does not include the DataSetTag with the ADRF ID in S202, the NWDAF containing the MTLF may request the ADRF to subscribe for a collection of analytics and data that correspond to the analytics generated by the ML model provisioned in S203, using the procedures defined in clause 6.2B.3.
(4) The NWDAF containing the MTLF may subscribe to UDM to get a notification on a change in subscription data for a target of ML model reporting by invoking a UDM SDM subscription (Nudm_SDM_Subscribe) service operation, and the UDM subscribes to UDR to get a notification of a modification on UE subscription data by invoking a UDR DM subscription (Nudr_DM_Subscribe) service operation.
(5) The NWDAF containing the MTLF may consider data quality into the accuracy monitoring by collecting fault prediction analytics data from an MDAS to determine a status of the data source NF, using a management data analytics (management data analytics, MDA) request.

If the NWDAF containing the MTLF has already collected new test data and performed ML model accuracy monitoring and retraining which is triggered by another NWDAF containing an AnLF (for ML model accuracy monitoring and retraining), the NWDAF containing the MTLF determines, based on its internal logic, whether to use data for subscription or not.

S209a to S209f: The NWDAF containing the MTLF receives requested data from various sources as requested in S208a to S208f.

S2010: Based on the collected analytics and data from S209a to S209f, the NWDAF containing the MTLF computes the accuracy using a prediction and actually measured data observed at the time which the prediction refers to. The NWDAF containing the MTLF may discard data from a data source if detecting data quality of the data source is not good. The NWDAF containing the MTLF may generate a prediction with the collected input data to calculate the accuracy if only the input data and the ground truth data are available.

S2011: An accuracy report is sent to the NWDAF containing the AnLF, for example, when a reporting threshold is met by invoking an NWDAF ML model provision notification (Nnwdaf_MLModelProvision_Notify) service operation.

S2012: Based on the computed accuracy, the NWDAF containing the MTLF may decide to retrain (retrain) or re-provision (re-provision) the ML model.

S2013: When a newly generated or retrained ML model is ready, the NWDAF containing the MTLF sends the new or retrained ML Model to the NWDAF containing the AnLF by invoking an NWDAF ML model provision notification (Nnwdaf_MLModelProvision_Notify) service operation. The NWDAF containing the MTLF may send an accuracy report of the new or retrained ML model to the NWDAF containing the AnLF.

It may be understood that, for the procedure for MTLF-based ML model accuracy monitoring, refer to related content in the 3rd Generation Partnership Project (3rd Generation Partnership Project, 3GPP) protocol TS 23.288 V18.2.0. Details are not described herein.

3. Procedure for monitoring analytics accuracy of an ML model:
Due to a registration of monitoring of the analytics accuracy of the ML model received from an NWDAF containing an AnLF and a local policy, an NWDAF containing an MTLF subscribes to the NWDAF containing the AnLF for receiving a notification of the accuracy of the ML model or analytics feedback information of the ML model. The NWDAF containing the MTLF may get a subscription endpoint address of the NWDAF containing the AnLF from information received in a previous registration or through a service discovery procedure at an NRF.

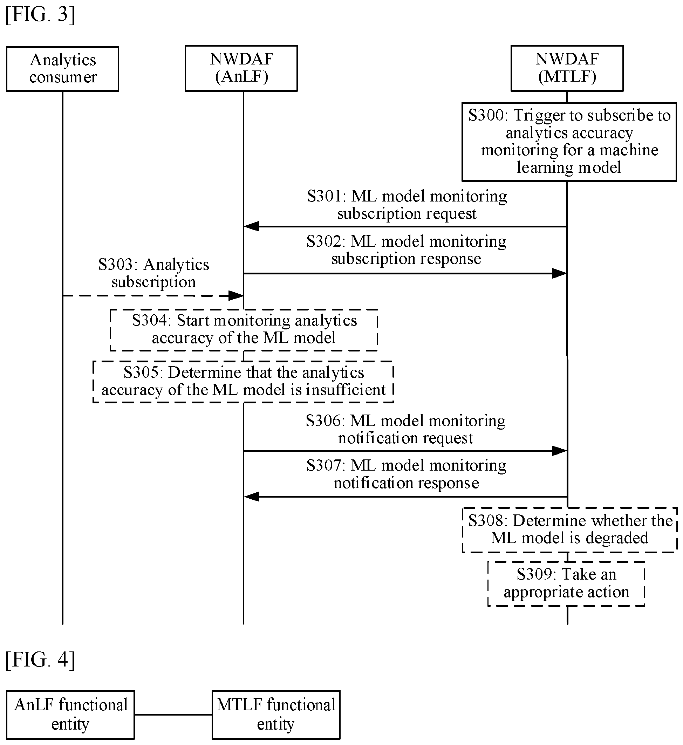

FIG. 3 illustrates the procedure either for monitoring the analytics accuracy of the ML model or for delivery of the analytics feedback information of the ML Model. NWDAF ML model monitoring subscription (Nnwdaf_MLModelMonitor_Subscribe) and NWDAF ML model monitoring notification (Nnwdaf_MLModelMonitor_Notify) service operations are used for the purposes. A service consumer (namely, the NWDAF containing the MTLF) subscribes at a service producer (namely, the NWDAF containing the AnLF), to be notified when either the analytics accuracy of the previously provisioned ML model is not sufficient or analytics feedback information is retrieved from an analytics consumer NF.

S300: Upon reception of an NWDAF ML model monitoring registration (Nnwdaf_MLModelMonitor_Register) request and based on the local policy, the NWDAF containing the MTLF determines to subscribe to analytics accuracy monitoring for the ML model.

S301: The NWDAF containing the MTLF sends an NWDAF ML model monitoring subscription (Nnwdaf_MLModelMonitor_Subscribe) request (analytics ID, unique identifier of an ML Model to be monitored, desired accuracy metrics to be monitored, and optional reporting threshold or reporting period) to an NWDAF containing an AnLF subscription endpoint.

S302: The NWDAF containing the AnLF sends a response to the NWDAF containing the MTLF.

S303: The analytics consumer NF may send the analytics feedback information to the NWDAF containing the AnLF.

S304: When S301 is triggered, the NWDAF containing the AnLF may start monitoring the analytics accuracy of the ML model (if not started yet). The NWDAF containing the AnLF can monitor the analytics accuracy in multiple ways, for example, comparing a prediction of the ML model and its corresponding ground truth data, comparing changes in internal configuration for analytics ID generation, and previous existent records of the analytics accuracy information.

S305: The NWDAF containing the AnLF determines whether the analytics accuracy of the ML Model is insufficient, to be specific, deviation of output analytics using a trained ML model from ground truth data (collected from the data producer NF and corresponding to analytics ID requested at a time which the prediction refers to) is greater than a reporting threshold (locally configured or received in a subscription request), or a reporting period indicated in the subscription request is reached.

S306: If the analytics feedback information is retrieved in S303 or the NWDAF containing the AnLF detects that the analytics accuracy of the ML model is insufficient in S305, the NWDAF containing the AnLF sends an NWDAF ML model monitoring notification (Nnwdaf_MLModelMonitor_Notify) request to a notification endpoint (for example, the NWDAF containing the MTLF). The notification request includes the analytics feedback information or the analytics accuracy information of the ML model (for example, a deviation value which indicates the deviation of the prediction generated using the ML model from the ground truth data, network data when the deviation occurs (which can be used by the NWDAF containing the MTLF for possible ML model retraining), and a quantity of inferences that were performed during a time interval between the NWDAF ML model monitoring registration (Nnwdaf_MLModelMonitor_Register) request and the notification request or between time of a last notification message and time of the current notification message), and optionally an indication that the analytics accuracy of the ML model does not meet an accuracy requirement of the ML Model.

S307: The NWDAF containing the MTLF sends a response.

S308: The NWDAF containing the MTLF determines, based on the notification in S306, whether the ML Model is degraded or not. If the notification contains the analytics feedback information, the NWDAF containing the MTLF may determine ML model degradation based on the procedure as described in clause 6.2E.2. Otherwise when the NWDAF containing the MTLF has received multiple pieces of analytics accuracy information from one or more NWDAFs containing an AnLF, the NWDAF containing the MTLF may consider that the ML model is degraded/to be updated, that is, enough pieces of analytics accuracy information received from the one or more NWDAFs containing the AnLF, indicating insufficient analytics accuracy.

It may be understood that an actual mechanism for the NWDAF containing the MTLF to determine the ML model degradation is an internal process of the NWDAF containing the MTLF. For example, the NWDAF containing the MTLF calculate global accuracy based on the analytics accuracy information and a quantity of inferences received from multiple NWDAFs containing the AnLF.

S309: When the ML model is considered to be degraded/updated in S308, the NWDAF containing the MTLF retrains an existing ML model or selects a new ML model. If the network data was not included in the NWDAF ML model monitoring notification (Nnwdaf_MLModelMonitor_Notify) request in S305, the NWDAF containing the MTLF may request data from an NWDAF containing an AnLF, an ADRF, and/or another 5GS entity as specified in clause 6.2, and use collected data for ML model retraining. The NWDAF containing the MTLF notifies the NWDAF containing the AnLF with updated trained ML model Information by invoking an NWDAF ML model provision notification (Nnwdaf_MLModelProvision_Notify) service operation, as described in clause 6.2A.

It may be understood that, for the procedure for MTLF-based ML model accuracy monitoring, refer to related content in 3GPP TS 23.288 V18.2.0. Details are not described herein.

It may be further understood that, in embodiments of this application, "monitor" and "supervise" may refer to a same action, and may be replaced with each other.

It can be learned from the foregoing descriptions of FIG. 2A, FIG. 2B, and FIG. 3 that, in the procedure for MTLF-based ML model accuracy monitoring and the procedure for monitoring the analytics accuracy of the ML model, accuracy monitoring or accuracy analytics is performed on one ML model. That is, when there is only one ML model, a data set corresponding to the ML model may be directly used, to complete evaluation of the ML model.

It is found through research that, when there are multiple ML models, all related data of the multiple ML models is stored in one data set. In this case, when any one of the multiple ML models is evaluated, all the data in the data set is used, that is, related data corresponding to the any one of the multiple ML models cannot be obtained from the data set. Consequently, reliability of evaluating the ML model is reduced. Therefore, how to improve reliability of evaluating an ML model in a large-scale scenario is a hot issue currently discussed.

For the foregoing technical problem, embodiments of this application provide the following technical solutions, to improve reliability of evaluating an ML model.

The following describes the technical solutions of this application with reference to accompanying drawings.

The technical solutions in embodiments of this application may be applied to various communication systems, such as a wireless network (Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system like a long term evolution (long term evolution, LTE) system, a worldwide interoperability for microwave access (worldwide interoperability for microwave access, WiMAX) communication system, 5th generation (5th generation, 5G) system like a new radio (new radio, NR) system, and a future communication system.

All aspects, embodiments, or features are presented in this application by describing a system that may include multiple devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "example" and "for example" are for representing giving an example, an illustration, or a description. Any embodiment or design solution described as an "example" in this application should not be explained as being more preferred or having more advantages than another embodiment or design solution. Exactly, the term "example" is for presenting a concept in a specific manner.

In embodiments of this application, "information (information)", "signal (signal)", "message (message)", "channel (channel)", and "signaling (signaling)" may be interchangeably used sometimes. It should be noted that meanings expressed by the terms are matchable when differences of the terms are not emphasized. The terms "of (of)", "corresponding, relevant (corresponding, relevant)", and "corresponding (corresponding)" may sometimes be interchangeably used. It should be noted that meanings expressed by the terms are matchable when differences of the terms are not emphasized. In addition, "/" mentioned in this application may indicate an "or" relationship.

A network architecture and a service scenario described in embodiments of this application are intended to describe the technical solutions in embodiments of this application more clearly, and do not constitute any limitation on the technical solutions provided in embodiments of this application. A person of ordinary skill in the art may know that: With evolution of the network architecture and emergence of a new service scenario, the technical solutions provided in embodiments of this application are also applicable to similar technical problems.

For ease of understanding of embodiments of this application, a communication system shown in FIG. 4 is first used as an example to describe in detail a communication system usable in embodiments of this application. For example, FIG. 4 is a diagram of an architecture of a communication system to which a communication method according to an embodiment of this application is applicable.

As shown in FIG. 4, the communication system is applicable to the foregoing 5GS, and includes an AnLF functional entity and an MTLF functional entity. The AnLF functional entity is carried on a network data analytics function NWDAF network element, and/or the MTLF functional entity is carried on an NWDAF network element.

It may be understood that the AnLF functional entity and the MTLF functional entity may be disposed on a same NWDAF network element, that is, one NWDAF network element includes the AnLF functional entity and the MTLF functional entity; or may be separately disposed on different NWDAF network elements, that is, different NWDAF network elements include the AnLF functional entity and the MTLF functional entity. This is not limited in embodiments of this application. In addition, the "AnLF functional entity" and the "MTLF functional entity" in embodiments of this application are merely examples for description. The "AnLF functional entity" may alternatively be replaced with any possible description, for example, "an NWDAF containing an AnLF". The "MTLF functional entity" may alternatively be replaced with any possible description, for example, "an NWDAF containing an MTLF". This is not limited in embodiments of this application.

Optionally, the communication system may further include an ADRF functional entity. It may be understood that, in embodiments of this application, the ADRF functional entity and an ADRF network element are different descriptions of a same object. That is, the ADRF functional entity may also be referred to as an ADRF network element.

In the communication system, related information of different ML models may be stored in different data sets, that is, related data of each ML model may be distinguished based on the data sets. For example, after receiving information that is about a first ML model and that is sent by the MTLF functional entity, the AnLF functional entity may fetch the first ML model based on the information, and set related information of the first ML model to be stored in a first data set, that is, set a correspondence between the first ML model and the first data set. Then, the correspondence may be sent to the MTLF functional entity by including the information about the first ML model and information about the first data set in a first message, so that the MTLF functional entity can subsequently fetch related data of the first ML model from the first data set, and perform evaluation, for example, robustness evaluation, on the first ML model based on the related data. Because there is no related data of another ML model in the first data set, that is, there is only the related data of the first ML model, reliability of the evaluation can be improved in this manner.

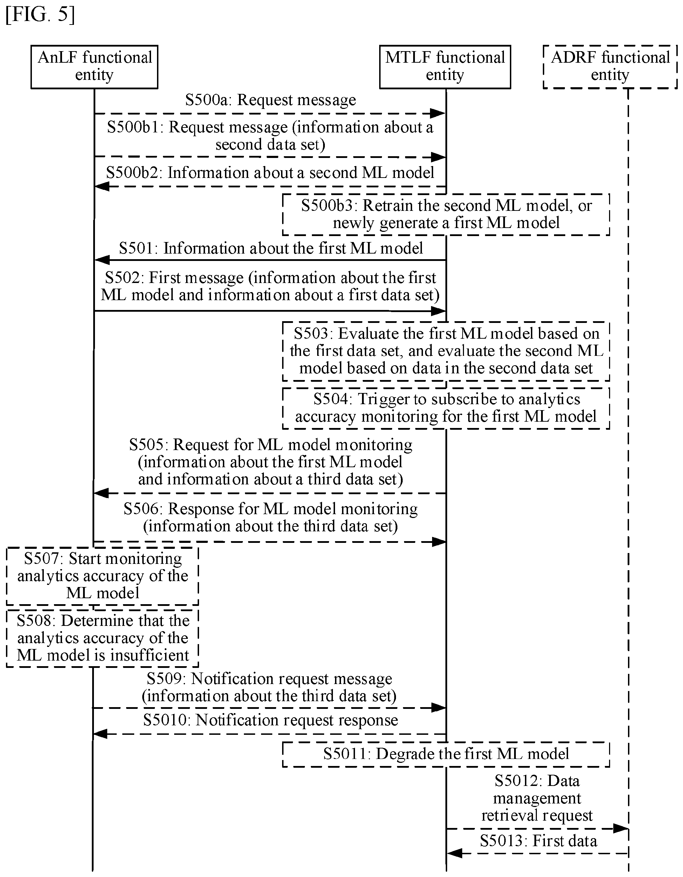

With reference to FIG. 5, the following specifically describes a procedure for interaction between network elements/devices in the foregoing communication system by using method embodiments. The communication method provided in embodiments of this application is applicable to the communication system. The following provides specific descriptions.

FIG. 5 is a schematic flowchart 1 of a communication method according to an embodiment of this application. The communication method is applicable to the foregoing communication system, and relates to interaction between an AnLF functional entity and an MTLF functional entity.

Specifically, as shown in FIG. 5, a procedure of the communication method is shown below.

S501: The MTLF functional entity sends information about a first ML model to the AnLF functional entity. Correspondingly, the AnLF functional entity receives the information about the first ML model from the MTLF functional entity.

The information about the first ML model may identify the first ML model. To be specific, the information about the first ML model may be used to indicate the first ML model, and may be used to fetch the first ML model. The information about the first ML model may be identification information (model identifier) of the first ML model, for example, an ID (unique ML model identifier) of the first ML model, a uniform resource locator (uniform resource locator, URL) address of the first ML model, or a fully qualified domain name (fully qualified domain name, FQDN) of the first ML model, or may be other information that can identify the first ML model. This is not limited.

The first ML model is an ML model trained by the MTLF functional entity, and may be a new ML model generated by the MTLF functional entity based on a data set, or may be an ML model retrained by the MTLF functional entity based on a generated ML model (for example, a second ML model, where the second ML model is described below), or may be a newly generated ML model. The first ML model may be one ML model or multiple ML models. To be specific, the MTLF functional entity may send information about one or more ML models to the AnLF functional entity, so that the AnLF functional entity fetches the one or more ML models. Specifically, when the first ML model is one ML model, the information about the first ML model may be information about the ML model, for example, an ID of the ML model. On the contrary, when the first ML model is multiple ML models, the information about the first ML model may be information about the multiple ML models, and the multiple ML models are in one-to-one correspondence with the information about the multiple ML models. For example, when the first ML model is an ML model #1, an ML model #2, and a model #3, the information about the first ML model is information about the ML model #1, information about the ML model #2, and information about the model #3.

After receiving the information about the first ML model, the AnLF functional entity may fetch, based on the information about the first ML model and at a location for storing the ML model, an ML model corresponding to the information, to obtain the first ML model. For example, the AnLF functional entity sends, to an ADRF functional entity, an ML model management retrieval (Nadrf_MLModelManagement_Retrieval) service request including the ID of the first ML model. The ADRF functional entity may store the ID of the first ML model and a model file in a URL or an FQDN of the ADRF functional entity. The AnLF functional entity may fetch the first ML model based on the URL or the FQDN, for example, fetch the first ML model based on an HTTP protocol technology.

A trigger condition for the MTLF functional entity to send the information about the first ML model to the AnLF functional entity may be that the AnLF functional entity requests an ML model from the MTLF functional entity, or may be that the MTLF functional entity generates a new ML model after sending the ML model to the AnLF functional entity. For example, the MTLF functional entity retrain the sent ML model to obtain a new ML model, or newly generate a new ML model.

Specifically, before the MTLF functional entity sends the information about the first ML model to the AnLF functional entity (S501), the AnLF functional entity may send, to the MTLF functional entity, a request message for requesting an ML model, or the MTLF functional entity has sent information about the ML model to the AnLF functional entity, and sends information about an updated ML model, namely, the information about the first ML model, in S501. Cases are separately described below.

### Case 1:

Before the MTLF functional entity sends the information about the first ML model to the AnLF functional entity (S501), the communication method may further include: The AnLF functional entity sends the request message to the MTLF functional entity. Correspondingly, the MTLF functional entity receives the request message from the AnLF functional entity (S500a in FIG. 5). That the AnLF functional entity receives the information about the first ML model from the MTLF functional entity (S501) includes: The AnLF functional entity receives the information about the first ML model from the MTLF functional entity in response to the request message.

The request message is used to request an ML model. The request message may not carry information about a data set. Alternatively, the request message may carry information about a data set. A quantity of data sets corresponding to the information about the data set is less than a quantity of ML models corresponding to information that is about the ML model and that is sent by the MTLF functional entity after the MTLF functional entity receives the request message. For example, the request message carries information about a data set #1, and the MTLF functional entity sends information about two ML models after receiving the request message. In this case, the quantity of data sets is less than the quantity of ML models. For another example, the request message carries information about a data set #11 and information about a data set #22, that is, the request message carries information about two data sets, and the MTLF functional entity sends information about three ML models after receiving the request message. In this case, the quantity of data sets is less than the quantity of ML models.

The request message may be sent using an ML model provision subscription (MLModelProvision_Subscribe) service operation or another operation. This is not limited in embodiments of this application.

In this embodiment of this application, the AnLF functional entity may send, to the MTLF functional entity, the request message used to request the ML model. After receiving the request message, the MTLF functional entity sends the information about the first ML model to the AnLF functional entity, that is, provides an ML model for the AnLF functional entity, so that the AnLF functional entity fetches the first ML model based on the information about the first ML model.

It may be understood that, the AnLF functional entity and the MTLF functional entity may preset a data set or a data set may be predefined in a protocol, so that after the AnLF functional entity sends the request message to the MTLF functional entity, the MTLF functional entity may generate the first ML model based on the data set, and send the first ML model to the AnLF functional entity.

### Case 2:

Before the MTLF functional entity sends the information about the first ML model to the AnLF functional entity (S501), the communication method may further include: The AnLF functional entity sends the request message to the MTLF functional entity. Correspondingly, the MTLF functional entity receives the request message from the AnLF functional entity (S500b1 in FIG. 5). When the MTLF functional entity receives the request message, the MTLF functional entity sends information about the second ML model to the AnLF functional entity. Correspondingly, in response to the request message, the AnLF functional entity receives the information about the second ML model from the MTLF functional entity (S500b2 in FIG. 5).

The request message is used to request an ML model, and carries information about a second data set. For details, refer to the foregoing related descriptions. Details are not described herein again.

The information about the second data set may be used to identify the second data set and a location of the second data set, that is, a location at which the second data set is stored. The information about the second data set may include identification information (DataSetTag) of the second data set and/or identification information of a second ADRF functional entity. The identification information of the second data set may be an ID of the second data set or other information that can identify the second data set. This is not limited. The identification information of the second ADRF functional entity may be an ID of the second ADRF functional entity, or other information that can identify the second ADRF functional entity. This is not limited.

It may be understood that, when there is one ADRF functional entity in the communication system, each data set is stored in the ADRF functional entity. In this case, the information about the second data set includes the identification information of the second data set, that is, a correspondence between the second data set and the ADRF functional entity does not need to be indicated, that is, a correspondence between each data set and the ADRF functional entity may be preset or predefined in a protocol. When there are multiple ADRF functional entities in the communication system, a correspondence between the second data set and the second ADRF functional entity storing the second data set needs to be indicated. In this case, the information about the second data set includes the identification information of the second data set and the identification information of the second ADRF functional entity.

The second data set is used to store related data of the ML model (the second ML model) that is sent by the MTLF functional entity after the MTLF functional entity receives the request message. In addition, the second data set may be created by the AnLF functional entity in an ADRF functional entity (for example, the second ADRF functional entity). It may be understood that the related data may be sent by the AnLF functional entity to the ADRF functional entity, and stored by the ADRF functional entity in the second data set.

The related data of the second ML model may include at least one of the following: input data of the second ML model, prediction data, ground truth data at a time which a prediction refers to, or deviation data at the time which the prediction refers to. The prediction data is an output result of the second ML model. The ground truth data at the time which the prediction refers to is an actual result for the input data of the second ML model, instead of a prediction result. In other words, if the prediction result is consistent with the actual result, it may indicate that the prediction result is correct. The deviation data at the time which the prediction refers to is deviated data of the prediction result. For example, a prediction result of a model for input data is inconsistent with a real value result corresponding to the input data. A consistent standard herein may be completely consistent, for example, values are equal, or may be a predefined standard, that is, the prediction result meets a specific requirement. For example, if a difference between the prediction result and the real value result is within a range, it may be understood that the prediction result is consistent with the real value result. It may be understood that the input data, the prediction data, and the ground truth data at the time which the prediction refers to may also be referred to as inference data. That is, when the related data of the second ML model includes the input data of the second ML model, the prediction data, and the ground truth data at the time which the prediction refers to, the related data of the second ML model may also be referred to as inference data of the second ML model.

The second ML model is an ML model trained by the MTLF functional entity, and the second ML model is an ML model sent before the first ML model. It may be understood that, the first ML model may be an ML model retrained based on the second ML model, or the first ML model may be a newly generated ML model (S500b3 in FIG. 5).

The information about the second ML model may identify the second ML model. To be specific, the information about the second ML model may be used to indicate the second ML model, and may be used to fetch the second ML model. The information about the second ML model may be identification information of the second ML model, for example, an ID of the second ML model, a URL address of the second ML model, or an FQDN of the second ML model, or may be other information that can represent the second ML model. This is not limited.

In this embodiment of this application, the information about the second data set carried in the request message may be used to indicate that the second data set corresponds to an ML model sent by the MTLF functional entity after the MTLF functional entity receives the request message. In other words, the information about the second data set may be used to indicate that related data of the ML model sent by the MTLF functional entity after the MTLF functional entity receives the request message is stored in the second data set. It may be understood that, in Case 2, a quantity of data sets corresponding to the information about the second data set is greater than or equal to a quantity of ML models corresponding to information about the ML model sent by the MTLF functional entity after the MTLF functional entity receives the request message, so that each ML model provided by the MTLF functional entity has a data set corresponding to the ML model. It may be further understood that a correspondence between information about a data set carried in the request message and information about an ML model subsequently sent by the MTLF functional entity may be preset or predefined in a protocol. For example, information about an n^{th} data set in the request message corresponds to information about an n^{th} ML model subsequently sent by the MTLF functional entity, where n is a positive integer. In this way, the AnLF functional entity and the MTLF functional entity determine a correspondence between each data set and each ML model based on the information about the second data set and the information about the ML model subsequently sent by the MTLF functional entity. In addition, the correspondence between the information about the data set carried in the request message and the information about the ML model subsequently sent by the MTLF functional entity may alternatively be set by using another method. For example, when sending the information about the ML model to the AnLF, the MTLF functional entity indicates a correspondence between information about each model and a data set carried in the request message, that is, the MTLF functional entity determines a specific data set corresponding to each ML model. This is not limited.

It can be learned that, when requesting an ML model from the MTLF functional entity for the first time, the AnLF functional entity may include information about a data set in the request message, that is, notify the MTLF functional entity that the related data of the requested ML model is to be stored in the data set, so that the MTLF functional entity can subsequently obtain the related data of the ML model from the data set and use the related data. In this way, the AnLF functional entity does not need to send the correspondence between the ML model and the data set to the MTLF functional entity after receiving the ML model, to reduce communication overheads.

Optionally, after the MTLF functional entity sends the information about the second ML model to the AnLF functional entity, the communication method may further include: The MTLF functional entity evaluates the second ML model based on the second data set (S503 in FIG. 5). That is, the MTLF functional entity may evaluate the second ML model by using the second data set. Because the second data set stores the related data of the second ML model and does not store related data of another ML model, the data in the second data set is used to perform evaluation, for example, accuracy evaluation and robustness evaluation, on the second ML model, so that reliability of evaluating the second ML model can be improved.

Based on the foregoing Case 1 and Case 2, it can be learned that, when requesting an ML model from the MTLF functional entity, the AnLF functional entity may select to include information about a data set or not include information about a data set in the request message. To be specific, when the request message does not carry information about a data set, the AnLF functional entity may send a correspondence between an ML model and a data set to the MTLF functional entity after receiving the ML model. When the request message carries information about a data set, and a quantity of data sets corresponding to the information about the data set is less than a quantity of ML models corresponding to information that is about an ML model and that is sent by the MTLF functional entity after the MTLF functional entity receives the request message, the AnLF functional entity may send a correspondence between the ML model and the data set to the MTLF functional entity after receiving the ML model. When the request message carries information about a data set, and a quantity of data sets corresponding to the information about the data set is greater than or equal to a quantity of ML models corresponding to information that is about an ML model and that is sent by the MTLF functional entity after the MTLF functional entity receives the request message, the AnLF functional entity does not need to send a correspondence between the ML model and the data set to the MTLF functional entity after receiving the ML model.

S502: The AnLF functional entity sends a first message to the MTLF functional entity. Correspondingly, the MTLF functional entity receives the first message from the AnLF functional entity.

The first message carries the information about the first ML model and information about a first data set, and may be used to indicate a correspondence between the first ML model and the first data set. The first message may be pre-configured or predefined in a protocol, or may be dynamically generated based on an actual situation. This is not limited in embodiments of this application. In addition, the first message may be sent using an ML model provision subscription update (MLModelProvision_Subscribe_Update) service operation or another operation. This is not limited in embodiments of this application.

The information about the first data set may be used to identify the first data set and a location of the first data set. The information about the first data set may include identification information (DataSetTag) of the first data set and/or identification information of a first ADRF functional entity. The identification information of the first data set may be an ID of the first data set or other information that can identify the first data set. This is not limited. The identification information of the first ADRF functional entity may be an ID of the first ADRF functional entity, or other information that can identify the first ADRF functional entity. This is not limited.

It may be understood that, when there is one ADRF functional entity in the communication system, each data set is stored in the ADRF functional entity. In this case, the information about the first data set includes the identification information of the first data set, that is, a correspondence between the first data set and the ADRF functional entity does not need to be indicated, that is, a correspondence between each data set and the ADRF functional entity may be preset or predefined in a protocol. When there are multiple ADRF functional entities in the communication system, a correspondence between the first data set and the first ADRF functional entity storing the first data set needs to be indicated. In this case, the information about the first data set includes the identification information of the first data set and the identification information of the first ADRF functional entity.

The first data set is used to store related data of the first ML model, and may be created by the AnLF functional entity in an ADRF functional entity (for example, the first ADRF functional entity). It may be understood that the related data of the first ML model may be sent by the AnLF functional entity to the ADRF functional entity, and stored by the ADRF functional entity in the first data set. The first data set corresponds to the first ML model, and the first data set may be one or more data sets. One ML model usually corresponds to one data set. To be specific, when the first ML model is one ML model, the first data set is one data set, and the ML model corresponds to the data set. When the first ML model is multiple ML models, the first data set is multiple data sets, and the multiple ML models are in one-to-one correspondence with the multiple data sets. For example, if the first data set is a data set #11, and the first ML model is an ML model #11, the data set #11 corresponds to the ML model #11. That is, related data of the ML model #11 is stored in the data set #11. For another example, if the first data set is a data set #a, a data set #b, and a data set #c, and the first ML model is an ML model #A, an ML model #B, and an ML model #C, the data set #a corresponds to the ML model #A, the data set #b corresponds to the ML model #B, and the data set #c corresponds to the ML model #C. That is, related data of the ML model #A is stored in the data set #a, related data of the ML model #B is stored in the data set #b, and related data of the ML model #C is stored in the data set #c. It may be understood that one ML model may alternatively correspond to multiple data sets, that is, related data of the ML model may be separately stored in multiple data sets. In this case, one ML model may correspond to multiple data sets, or multiple ML models may correspond to multiple data sets. Corresponding setting may be performed based on an actual situation. This is not limited.

It can be learned that the first data set corresponds to the first ML model, the information about the first data set corresponds to the first data set, and the information about the first ML model corresponds to the first ML model. Therefore, the information about the first data set corresponds to the information about the first ML model. When the information about the first data set is information about multiple data sets, and the information about the first ML model is information about multiple ML models, the information about the multiple data sets corresponds to the information about the multiple ML models. In addition, the information about the multiple data sets may be in one-to-one correspondence with the information about the multiple ML models, or information about at least two data sets may correspond to information about one ML model. This is not limited in embodiments of this application.

For example, the information about the first data set is information about multiple data sets, and the information about the multiple data sets is an ID of the data set #1, an ID of a data set #2, and an ID of a data set #3. The information about the first ML model is information about multiple ML models, and the information about the multiple ML models is an ID of the ML model #1, an ID of the ML model #2, and an ID of the ML model #3. The ID of the data set #1 corresponds to the ID of the ML model #1, the ID of the data set #2 corresponds to the ID of the ML model #2, and the ID of the data set #3 corresponds to the ID of the ML model #3. That is, the information about the multiple data sets is in one-to-one correspondence with the information about the multiple ML models.

For another example, the information about the first data set is information about multiple data sets, and the information about the multiple data sets is an ID of the data set #11, an ID of the data set #22, and an ID of the data set #33. The information about the first ML model is information about multiple ML models, and the information about the multiple ML models is an ID of the ML model #11 and an ID of an ML model #22. The ID of the data set #11 corresponds to the ID of the ML model #11, and both the ID of the data set #22 and the ID of the data set #33 correspond to the ID of the ML model #22. That is, related data of the ML model #22 may be stored in the data set #22 and the data set #33, that is, information about at least two data sets corresponds to information about one ML model.

The related data of the first ML model may include at least one of the following: input data of the first ML model, prediction data, ground truth data at a time which a prediction refers to, or deviation data at the time which the prediction refers to. For each piece of data, refer to the related descriptions in "S501." Details are not described herein again. It may be understood, when the related data of the first ML model includes the input data of the first ML model, the prediction data, and the ground truth data at the time which the prediction refers to, the related data of the first ML model may also be referred to as inference data of the first ML model.

In this embodiment of this application, when the first ML model is one ML model, the information about the first ML model and the information about the first data set are carried in the first message, for example, the information about the first ML model and the information about the first data set are placed in a tuple, it may indicate that the information about the first ML model corresponds to the information about the first data set, that is, the related data of the first ML model is stored in the first data set. When the first ML model is multiple ML models, information about each ML model and information about a data set corresponding to the ML model may be placed in a same tuple in the first message. In other words, different tuples are used to distinguish correspondences between different ML models and data sets. For example, [Model ID1, DataSetTagl] may indicate that the first ML model corresponds to the first data set, that is, the AnLF functional entity may store the related data of the first ML model in the first data set; and [Model ID2, DataSetTag2, DataSetTag3] may indicate that the second ML model corresponds to the second data set and a third data set, that is, the AnLF functional entity may store the related data of the second ML model in the second data set and the third data set. That is, the information about the first data set and the information about the first ML model are carried in the first message, so that the correspondence between the first data set and the first ML model can be indicated. It may be understood that the foregoing manner of placing the information about the first data set and the information about the first ML model in at least one tuple is merely an example, and another implementation may alternatively be available. This is not limited in embodiments of this application.

After receiving the first message, the MTLF functional entity may determine, based on information carried in the first message, the first data set corresponding to the first ML model, that is, learn that the AnLF functional entity stores the related data of the first ML model in the first data set. In this way, when evaluating the first ML model or retraining a model, the MTLF functional entity may use the data in the first data set.

In conclusion, the MTLF functional entity sends the information about the first ML model to the AnLF functional entity, so that the AnLF functional entity fetches the first ML model based on the information about the first ML model, that is, the MTLF functional entity provides the first ML model for the AnLF functional entity. After receiving the information about the first ML model, the AnLF functional entity may set the correspondence between the first ML model and the first data set based on the information about the first ML model, that is, store the related data of the first ML model in the first data set. In addition, the correspondence is sent to the MTLF functional entity via the first message carrying the information about the first ML model and the information about the first data set. To be specific, when the AnLF functional entity receives an ML model, the AnLF functional entity may send one tuple to the MTLF functional entity, where the tuple includes identification information of the ML model, identification information (DataSetTag) of a data set, and/or identification information (ADRF ID) of an ADRF, and indicate a mapping relationship between the identification information of the data set and the identification information of the ML model by using an ML model provision subscription (Nnwdaf_MLModelProvision_Subscribe) service operation. It may be understood that another service operation may be used for implementation. This is not limited. Correspondingly, after receiving the tuple, the MTLF functional entity may determine that data corresponding to the identification information of the data set in the tuple is related data of the model corresponding to the identification information of the ML model, that is, the MTLF functional entity may fetch the related data of the ML model from the data set corresponding to the identification information of the data set. In this way, the MTLF functional entity may evaluate the first ML model by using the data in the first data set, instead of evaluating the first ML model by using a data set containing data of multiple ML models, so that reliability of evaluating the first ML model can be improved.

It may be understood that, in this embodiment of this application, the first data set is used to store the data of the first ML model, that is, the first data set may store the data of the first ML model. In this case, the information about the first ML model (ML Model Identifier) may also indicate a model corresponding to data corresponding to an identifier (DataSetTag) of the first data set. In an example, the corresponding model is the first ML model.

It may be further understood that, in this embodiment of this application, after the AnLF functional entity sends the request message to the MTLF functional entity (S500a in FIG. 5), the MTLF functional entity may be triggered to send the information about the first ML model to the AnLF functional entity (S501 in FIG. 5), that is, provide the first ML model for the AnLF functional entity. After the AnLF functional entity receives the information about the first ML model from the MTLF functional entity, the AnLF functional entity may be triggered to send the information about the first ML model and the information about the first data set to the MTLF functional entity (S502 in FIG. 5), that is, provide the correspondence between the first ML model and the first data set for the MTLF functional entity. That is, the three steps (S500a, S501, and S502 in FIG. 5) may be strongly associated. The request message is a message that does not carry information about a data set, or the request message is a message that carries information about a data set, but a quantity of data sets corresponding to the information about the data set is less than a quantity of ML models corresponding to information that is about the ML model and that is sent by the MTLF functional entity after the MTLF functional entity receives the request message.

Optionally, after the MTLF functional entity receives the first message from the AnLF functional entity, the communication method may further include: The MTLF functional entity evaluates the first ML model based on the first data set (S503 in FIG. 5). That is, the MTLF functional entity may evaluate the first ML model by using the first data set. Because the first data set is used to store the related data of the first ML model and does not store related data of another ML model, the data in the first data set is used to perform evaluation, for example, accuracy evaluation and robustness evaluation, on the first ML model, so that reliability of evaluating the first ML model can be improved.

Optionally, after the AnLF functional entity obtains the first ML model, the MTLF functional entity may request the AnLF functional entity to monitor analytics accuracy of the first ML model (S504 to S5013 in FIG. 5). In a process in which the AnLF functional entity monitors the ML model analytics accuracy of the first ML model, the MTLF functional entity or the AnLF functional entity may set a third data set used to store the related data (for example, data deviated at the time which the prediction refers to) of the first ML model, and send information about the third data set to the AnLF functional entity or the MTLF functional entity, so that the MTLF functional entity can use data in the third data set when updating the ML model. The following separately describes manners of setting and sending the third data set.

Manner 1: The MTLF functional entity sets and sends the third data set.

In this case, the communication method may further include: When the MTLF functional entity receives an ML model monitoring registration request, the MTLF functional entity sends a request for ML model monitoring to the AnLF functional entity. Correspondingly, the AnLF functional entity receives the request for ML model monitoring from the MTLF functional entity (S505 in FIG. 5).

The request for ML model monitoring carries the information about the first ML model and the information about the third data set, to indicate a correspondence between the first ML model and the third data set. The request for ML model monitoring may be sent by using an ML model monitoring subscription request (Nnwdaf_MLModelMonitor_Subscribe request) service operation or another operation. This is not limited in embodiments of this application.

The information about the third data set may be used to identify the third data set and a storage location of the third data set. The information about the third data set may include identification information of the third data set and/or identification information of a third ADRF functional entity. The identification information of the third data set may be an ID of the third data set or other information that can identify the third data set. This is not limited. The identification information of the third ADRF functional entity may be an ID of the third ADRF functional entity, or other information that can identify the third ADRF functional entity. This is not limited.

It may be understood that, when there is one ADRF functional entity in the communication system, each data set is stored in the ADRF functional entity. In this case, the information about the third data set includes the identification information of the third data set, that is, a correspondence between the third data set and the ADRF functional entity does not need to be indicated, that is, a correspondence between each data set and the ADRF functional entity may be preset or predefined in a protocol. When there are multiple ADRF functional entities in the communication system, a correspondence between the third data set and the third ADRF functional entity storing the third data set needs to be indicated. In this case, the information about the third data set includes the identification information of the third data set and the identification information of the third ADRF functional entity.

The third data set is used to store the related data of the first ML model, and the third data set may be created by the MTLF functional entity in an ADRF functional entity (for example, the third ADRF functional entity). It may be understood that the AnLF functional entity may store the related data of the first ML model in the third data set.

The related data of the first ML model includes the deviation data at the time which the prediction refers to. The deviation data refers to deviated data of a prediction result. For example, each group of data of the first ML model includes 100 pieces of data, and there are three groups of data in total: a data group #1, a data group #2, and a data group #3. The data group #1 includes 20 pieces of deviated data, the data group #2 includes 10 pieces of deviated data, and the data group #3 includes 15 pieces of deviated data. In this case, the deviation data of the first ML model at the time which the prediction refers to is a total of 45 pieces of deviated data: the 20 pieces of deviated data in the data group #1, the 10 pieces of deviated data in the data group #2, and the 15 pieces of deviated data in the data group #3.

It may be understood that, in a conventional technology, when the analytics accuracy of the ML model is insufficient, network data when a deviation occurs and that is sent by the AnLF functional entity to the MTLF functional entity includes a part of deviation data and data that is not deviated. For example, if each group of data of the first ML model includes 100 pieces of data, and accuracy of a first group of data is 90%, which is greater than an accuracy threshold (80%), it is determined that the first group of data is not the network data when the deviation occurs. If accuracy of a second group of data is 70%, which is smaller than the accuracy threshold (80%), it is determined that the second group of data is the network data when the deviation occurs, that is, the second group of data is sent to the MTLF functional entity. It can be learned that, in the conventional technology, the network data when the deviation occurs is inaccurate, that is, the network data includes a part of the deviation data, and includes normal data. Therefore, the deviation data at the time which the prediction refers to is stored in the third data set, to guide the MTLF functional entity to subsequently update the ML model, so as to improve prediction accuracy of an updated ML model.

It can be learned that, in Manner 1, the MTLF functional entity may set the third data set in the third ADRF functional entity, and send the information about the first ML model and the information about the third data set to the AnLF functional entity when requesting the AnLF functional entity to monitor the analytics accuracy of the ML model. In this way, the AnLF functional entity stores the related data of the first ML model in the third data set, so that the MTLF functional entity uses the third data set when updating the ML model.

Manner 2: The AnLF functional entity sets and sends the third data set based on a request for ML model monitoring.

In this case, the communication method may further include: The MTLF functional entity sends, to the AnLF functional entity, the request for ML model monitoring. Correspondingly, the AnLF functional entity receives the request for ML model monitoring from the MTLF functional entity. In response to the request for ML model monitoring, the AnLF functional entity sends the information about the third data set to the MTLF functional entity. Correspondingly, the MTLF functional entity receives the information about the third data set from the AnLF functional entity (S506 in FIG. 5). That is, the information about the third data set is carried in a response for ML model monitoring.

The request for ML model monitoring carries the information about the first ML model, and the information about the first ML model is used to indicate analytics accuracy of monitoring the first ML model. For the request for ML model monitoring and the third data set, refer to the foregoing related descriptions in "Manner 1". Details are not described herein again.

It can be learned that, in Manner 2, after receiving the request for ML model monitoring from the MTLF functional entity, the AnLF functional entity may set the third data set in the ADRF functional entity (for example, the third ADRF functional entity), and send the correspondence between the first ML model and the third data set to the MTLF functional entity, so that the MTLF functional entity uses data in the third data set when updating the ML model.

Manner 3: The AnLF functional entity sets the third data set, and sends the information about the third data set to the MTLF functional entity via a notification request message.

In this case, the communication method may further include: The AnLF functional entity monitors the analytics accuracy of the first ML model. The AnLF functional entity sends the notification request message to the MTLF functional entity when the analytics accuracy of the first ML model is insufficient (insufficient). Correspondingly, the MTLF functional entity receives the notification request message from the AnLF functional entity (S509 in FIG. 5).

The analytics accuracy of the first ML model may indicate accuracy of a prediction result of the first ML model. Whether the analytics accuracy of the first ML model is insufficient may be determined based on an accuracy rate of the prediction result of the first ML model and a preset threshold. To be specific, when the accuracy rate of the prediction result of the first ML model is less than the preset threshold, it may be determined that the analysis accuracy of the first ML model is insufficient. For example, the accuracy rate of the prediction result of the first ML model is 80%, which is less than a threshold (90%). In this case, the analytics accuracy of the first ML model is insufficient. It may be understood that a manner in which the AnLF functional entity monitors the analytics accuracy of the first ML model and a manner in which the AnLF functional entity determines whether the analytics accuracy of the first ML model is insufficient may reuse a method in the conventional technology. Details are not described herein.

The notification request message carries the information about the third data set, to indicate the correspondence between the first ML model and the third data set. The notification request message may be sent by using an ML model monitoring notification request (Nnwdaf_MLModelMonitoring_Notify request) service operation or another operation. This is not limited in embodiments of this application.

For the third data set, refer to the foregoing related descriptions in "Manner 1". Details are not described herein again.

It can be learned that, in Manner 2, after receiving the request for ML model monitoring from the MTLF functional entity, the AnLF functional entity may temporarily not send the information about the third data set to the MTLF functional entity, but send the information about the third data set after the AnLF functional entity sends the notification request message to the MTLF functional entity when the analytics accuracy of the first ML model is insufficient after monitoring the analytics accuracy of the first ML model, to indicate to store the related information of the first ML model in the third data set.

It may be understood that, in Manner 1 and Manner 2, when the MTLF functional entity sends the request for ML model monitoring to the AnLF functional entity, the information about the first ML model is carried, to indicate to monitor the analytics accuracy of the first ML model. Therefore, when the AnLF functional entity sends the information about the third data set to the MTLF functional entity, the information about the first ML model does not need to be carried. That is, the correspondence between the third data set and the first ML model may be indicated by sending the information about the third data set.

In addition, for other steps (S504, S507, S508, and S5010 to S5013 in FIG. 5) in which the AnLF functional entity monitors the ML model analytics accuracy of the first ML model, refer to the related descriptions of the foregoing "3. Procedure for monitoring analytics accuracy of an ML model". Details are not described herein again.

It may be further understood that, after the AnLF functional entity obtains the first ML model, the MTLF functional entity may further monitor the analytics accuracy of the first ML model. That is, in this case, the foregoing related steps (S504 to S5013) in which the AnLF functional entity monitors the ML model analytics accuracy of the first ML model do not need to be performed.

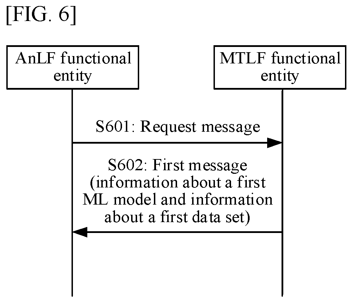

FIG. 6 is a schematic flowchart 2 of a communication method according to an embodiment of this application. The communication method is applicable to the foregoing communication system, and relates to interaction between an AnLF functional entity and an MTLF functional entity.

Specifically, as shown in FIG. 6, a procedure of the communication method is shown below.

S601: The AnLF functional entity sends a request message to the MTLF functional entity. Correspondingly, the MTLF functional entity receives the request message from the AnLF functional entity.

The request message is used to request an ML model. For details, refer to the foregoing related descriptions in "Case 1 of S501". Details are not described herein again.

S602: The MTLF functional entity send a first message to the AnLF functional entity. Correspondingly, the AnLF functional entity receives the first message from the MTLF functional entity.

The first message carries information about a first ML model and information about a first data set. The information about the first ML model is used to indicate the first ML model. For the first ML model and information about a first model, refer to the foregoing related descriptions in "S501". Details are not described herein again. The first data set is used to store related data of the first ML model, and the first data set is created by the MTLF functional entity in an ADRF functional entity (for example, a first ADRF functional entity). The information about the first data set is used to identify the first data set. For the first data set, the information about the first data set, and the related information, refer to the foregoing related descriptions in "S502". Details are not described herein again.

The information about the first ML model and the information about the first data set that are carried in the first message may indicate a correspondence between the first ML model and the first data set, that is, indicate the AnLF functional entity to store the related data of the first ML model in the first data set. In this way, the MTLF functional entity may evaluate the first ML model based on data (the related data of the first ML model) stored in the first data set, so that reliability of evaluating the first ML model can be improved.

Optionally, before the MTLF functional entity sends the first message to the AnLF functional entity (S602), the communication method may further include: The MTLF functional entity sends, to the first ADRF functional entity, a request for creating the first data set in the first ADRF functional entity. Correspondingly, the first ADRF functional entity receives, from the MTLF functional entity, the request for creating the first data set in the first ADRF functional entity.

The request for creating the first data set in the first ADRF functional entity may carry the information about the first data set, to indicate the first ADRF functional entity to create the first data set based on the information about the first data set. That is, the first data set may be created by the MTLF functional entity. It may be understood that when the first data set is multiple data sets, the MTLF functional entity may create the multiple data sets in the first ADRF functional entity. That is, information about the multiple ML models may be carried in the request for creating the first data set in the first ADRF functional entity.

Optionally, after the AnLF functional entity receives the first message from the MTLF functional entity (S602), the communication method may further include: The AnLF functional entity sends the related data of the first ML model and the information about the first data set to the first ADRF functional entity based on the information about the first data set. Correspondingly, the first ADRF functional entity receives the related data of the first ML model and the information about the first data set from the AnLF functional entity.

It can be learned that when storing the related data of the first ML model, the AnLF functional entity may send the related data and the information about the first data set to the first ADRF functional entity, to indicate the first ADRF functional entity to store the related data in the first data set corresponding to the information about the first data set. In this case, the first ADRF functional entity may store the related data of the first ML model based on the information about the first data set.

Optionally, after the MTLF functional entity sends the first message to the AnLF functional entity (S602), the communication method may further include: The MTLF functional entity evaluates the first ML model based on data in the first data set. That is, the MTLF functional entity may evaluate the first ML model by using the data in the first data set. Specifically, after the AnLF functional entity stores the related data of the first ML model in the first ADRF functional entity, the MTLF functional entity may fetch the related data of the first ML model from the first ADRF functional entity. For example, the MTLF functional entity sends, to the first ADRF functional entity, a request for fetching the related data of the first ML model, where the request may carry the information about the first data set, to indicate, via the information about the first data set, the first ADRF functional entity to return the data in the first data set (namely, the related data of the first ML model) to the MTLF functional entity. After obtaining the related data of the first ML model, the MTLF functional entity may evaluate the first ML model by using the related data, for example, evaluate accuracy and robustness.

Further, after evaluating the first ML model, the MTLF functional entity may send an evaluation result to the AnLF functional entity. In addition, the MTLF functional entity may further send information about a new ML model (for example, a second ML model) and information about a data set (for example, a second data set) corresponding to the ML model to the AnLF functional entity, so that the AnLF functional entity fetches and uses the second ML model, and stores related data of the second ML model in the second data set.

It may be understood that when multiple AnLF functional entities all use the first ML model, the multiple AnLF functional entities may store, in the first data set, related data of the first ML model used by the multiple AnLF functional entities. In this case, after the first ADRF functional entity receives the related data of the first ML model and the information about the first data set that are sent by the multiple AnLF functional entities, the first ADRF functional entity may record a source of each piece of data, that is, a specific AnLF functional entity from which the data comes, to distinguish the data.

For example, both an AnLF functional entity #1 and ane AnLF functional entity #2 use an ML model #aa, and data of the ML model #aa is stored in a data set #aa. The AnLF functional entity #1 sends related data (denoted as related data #1) of the ML model #aa and information about the data set #aa to the ADRF functional entity, and the AnLF functional entity #2 also sends the related data (denoted as related data #2) of the ML model #aa and the information about the data set #aa to the ADRF functional entity. In this case, the ADRF functional entity may store the related data #1 in the data set #aa, and the related data #1 is recorded as data from the AnLF functional entity #1, for example, the related data #1 is marked with a tag of the AnLF functional entity #1. Correspondingly, the ADRF functional entity may also store the related data #2 in the data set #aa, and record the related data #2 as data from the AnLF functional entity #2, for example, the related data #2 is marked with a tag of the AnLF functional entity #2. In this way, entities from different AnLF functional entities can be distinguished.

It may be further understood that, when the multiple AnLF functional entities all use the first ML model, the MTLF may alternatively set different data sets for each of the multiple AnLF functional entities, that is, send information about the different data sets to the AnLF functional entities, so that the AnLF functional entities store the related data of the first ML model in the different data sets. In this case, after receiving the related data that is of the first ML model and that is sent by each AnLF functional entity, the ADRF functional entity does not need to record a source of each piece of data, that is, record a specific AnLF functional entity from which the data comes.

In addition, the MTLF functional entity may further request the AnLF functional entity to monitor analytics accuracy of the first ML model. In a process in which the AnLF functional entity monitors the ML model analytics accuracy of the first ML model, the MTLF functional entity or the AnLF functional entity may set a third data set used to store the related data (for example, data deviated at a time which a prediction refers to) of the first ML model, and send information about the third data set to the AnLF functional entity or the MTLF functional entity, so that the MTLF functional entity can use data in the third data set when updating the ML model. For details, refer to the foregoing related descriptions in "Manner 1 to Manner 3 of S502". Details are not described herein again.

In conclusion, before providing the first ML model for the AnLF functional entity, the MTLF functional entity may set a correspondence between the first ML model and the first data set, that is, set the related information of the first ML model to be stored in the first data set. Further, when sending the first message carrying the information about the first ML model to the AnLF functional entity, the MTLF functional entity may further include the information about the first data set in the first message, so that the AnLF functional entity can obtain the first ML model based on the information about the first ML model, and store the related information of the first ML model in the first data set based on the correspondence. In this way, the MTLF functional entity may obtain the related data of the first ML model from the first data set, to evaluate the first ML model based on the related data, so as to improve reliability of evaluating the first ML model.

### Scenario 1:

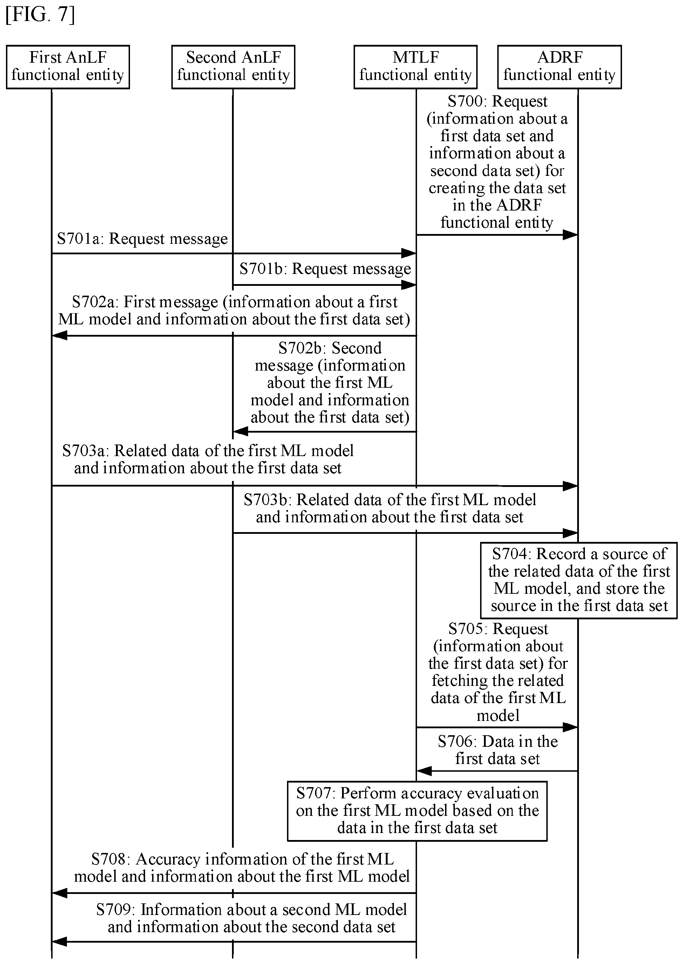

FIG. 7 is a schematic flowchart 3 of a communication method according to an embodiment of this application. The communication method is applicable to the foregoing communication system, and mainly relates to a first AnLF functional entity, a second AnLF functional entity, an MTLF functional entity, and an ADRF functional entity. In Scenario 1, the AnLF functional entity may request an ML model from the MTLF functional entity, and the MTLF functional entity may provide the ML model for the AnLF functional entity, and indicate a data set in which related data of the ML model is stored.

As shown in FIG. 7, a procedure of the communication method is shown below.

S700: The MTLF functional entity sends, to the ADRF functional entity, a request for creating a data set in the ADRF functional entity. Correspondingly, the ADRF functional entity receives, from the MTLF functional entity, the request for creating the data set in the ADRF functional entity.

The request for creating the data set in the ADRF functional entity may carry information about a first data set and information about a second data set, to indicate the ADRF functional entity to create the first data set and the second data set. For details, refer to the related descriptions of the foregoing "S602". Details are not described herein again.

S701a: The first AnLF functional entity sends a request message to the MTLF functional entity. Correspondingly, the MTLF functional entity receives the request message from the AnLF functional entity.

S701b: The second AnLF functional entity sends a request message to the MTLF functional entity. Correspondingly, the MTLF functional entity receives the request message from the AnLF functional entity.

S702a: The MTLF functional entity send a first message to the first AnLF functional entity. Correspondingly, the first AnLF functional entity receives the first message from the MTLF functional entity.

The first message carries information about a first ML model and information about a first data set.

S702b: The MTLF functional entity send a second message to the second AnLF functional entity. Correspondingly, the second AnLF functional entity receives the second message from the MTLF functional entity.

The second message carries the information about the first ML model and the information about the first data set.

S703a: The first AnLF functional entity sends related data of the first ML model and the information about the first data set to the ADRF functional entity based on the information about the first data set. Correspondingly, the ADRF functional entity receives the related data of the first ML model and the information about the first data set from the first AnLF functional entity.

S703b: The second AnLF functional entity sends the related data of the first ML model and the information about the first data set to the ADRF functional entity based on the information about the second data set. Correspondingly, the ADRF functional entity receives the related data of the first ML model and the information about the first data set from the second AnLF functional entity.

S704: The ADRF functional entity records a source of the related data of the first ML model, and stores the first data set.

It may be understood that the source of the related data in the first data set is the first AnLF functional entity or the second AnLF functional entity.

S705: The MTLF functional entity sends, to the ADRF functional entity, a request for fetching the related data of the first ML model. Correspondingly, the ADRF functional entity receives, from the MTLF functional entity, the request for fetching the related data of the first ML model.

The request for fetching the related data of the first ML model may carry the information about the first data set, to indicate, via the information about the first data set, the ADRF functional entity to return data in the first data set, namely, the related data of the first ML model, to the MTLF functional entity.

S706: The ADRF functional entity sends the data in the first data set to the MTLF functional entity. Correspondingly, the MTLF functional entity receives the data in the first data set from the ADRF functional entity.

S707: The MTLF functional entity performs accuracy evaluation on the first ML model based on the data in the first data set.

The MTLF functional entity may reuse a method in a conventional technology to perform accuracy evaluation on the first ML model. Details are not described herein.

It may be understood that the MTLF functional entity may obtain accuracy information of the first ML model after performing accuracy evaluation on the first ML model.

S708: The MTLF functional entity sends the accuracy information of the first ML model and the information about the first ML model to the first AnLF functional entity. Correspondingly, the first AnLF functional entity receives the accuracy information of the first ML model and the information about the first ML model from the MTLF functional entity.

It may be understood that the accuracy information of the first ML model and the information about the first ML model that are sent by the MTLF functional entity may indicate that the accuracy information is the accuracy information of the first ML model. In addition, S708 may be implemented using an ML model provision notification (Nnwdaf_MLModelProvision_Notify) service operation.

S709: The MTLF functional entity sends information about a second ML model and the information about the second data set to the first AnLF functional entity. Correspondingly, the first AnLF functional entity receives the information about the second ML model and information about a third data set from the MTLF functional entity.

The information about the second ML model is used to fetch the second ML model. To be specific, the first AnLF functional entity may fetch the second ML model based on the information about the second ML model. The information about the second ML model and the information about the second data set may indicate the first AnLF functional entity to store related data of the second ML model in the second data set.

The second ML model may be an ML model retrained by the MTLF functional entity based on the first ML model, or may be a newly generated ML model.

For specific implementation of S700 to S709, refer to the related descriptions of S601 and S602. Details are not described herein again.

It may be understood that, S701a to S703a and S701b to S703b may be performed in a different sequence. To be specific, a sequence in which the first AnLF functional entity and the second AnLF functional entity fetch the ML model and store the related data of the ML model may be set based on an actual situation. This is not limited in embodiments of this application. For example, after the first AnLF functional entity receives the first message, the second AnLF functional entity sends the request message, that is, S701b is performed after S702a. For another example, the first AnLF functional entity and the second AnLF functional entity sends the request messages at the same time, that is, S701a and S701b are performed at the same time.

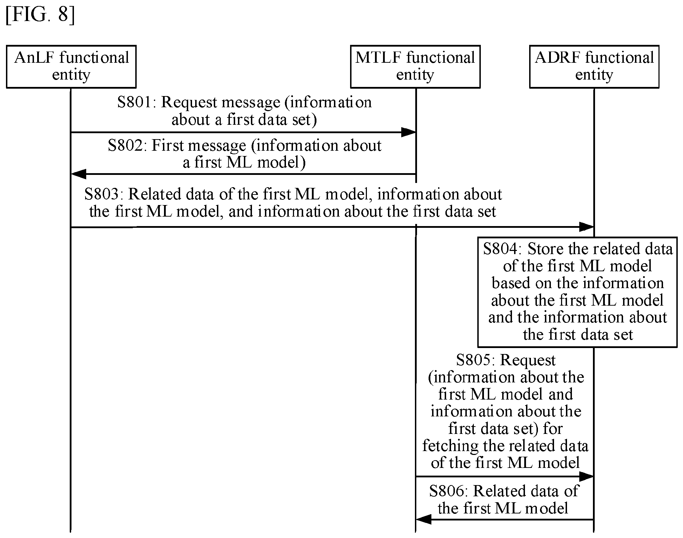

FIG. 8 is a schematic flowchart 4 of a communication method according to an embodiment of this application. The communication method is applicable to the foregoing communication system, and relates to interaction among an AnLF functional entity, an MTLF functional entity, and an ADRF functional entity.

Specifically, as shown in FIG. 8, a procedure of the communication method is shown below.

S801: The AnLF functional entity sends a request message to the MTLF functional entity. Correspondingly, the MTLF functional entity receives the request message from the AnLF functional entity.

The request message is used to request an ML model, and carries information about a first data set. For details, refer to the foregoing related descriptions in "S501". Details are not described herein again.

The first data set is used to store related data of multiple ML models, and the multiple ML models include an ML model, for example, a first ML model, sent by the MTLF functional entity after receiving the request message. For example, the first data set is used to store related data of three ML models: related data of an ML model #1, an ML model #2, and an ML model #3, and the first ML model is the ML model #1. The information about the first data set is used to indicate the first data set. For the first data set and the information about the first data set, refer to the foregoing related descriptions in "S501". Details are not described herein again.

The information about the first data set is carried in the request message, to indicate that the AnLF functional entity stores subsequently received related data of the ML model in the first data set. The MTLF functional entity may fetch the related data of the ML model from the first data set.

Optionally, before the AnLF functional entity sends the request message to the MTLF functional entity, the communication method may further include: The AnLF functional entity creates the first data set. For example, the AnLF functional entity may send, to the ADRF functional entity, a request for creating the first data set in the ADRF functional entity. Correspondingly, the ADRF functional entity receives, from the AnLF functional entity, the request for creating the first data set in the ADRF functional entity. After receiving the request, the ADRF functional entity may create the first data set.

It may be understood that, for the ADRF functional entity, after creating the first data set, the ADRF functional entity does not know specific data that the first data set is used to store. After subsequently receiving data that needs to be stored and the information about the first data set, the ADRF functional entity may store the data in the first data set based on the information about the first data set.

S802: The MTLF functional entity send a first message to the AnLF functional entity. Correspondingly, the AnLF functional entity receives the first message from the MTLF functional entity.

The first message carries information about the first ML model. The information about the first ML model is used to indicate the first ML model, and the information about the first ML model may be used to fetch the first ML model. For details, refer to the foregoing related descriptions in "S501". Details are not described herein again. That is, the MTLF functional entity may deliver the first ML model to the AnLF functional entity via the first message.

The first message that carries the information about the first ML model is sent to the AnLF functional entity, so that the AnLF functional entity can obtain the first ML model based on the information about the first ML model.

It may be understood that the first data set may alternatively be created by the MTLF functional entity in the ADRF functional entity. In this case, the request message sent by the AnLF functional entity to the MTLF functional entity does not carry the information about the first data set, and the MTLF functional entity may include the information about the first data set in the first message sent to the AnLF functional entity.

S803: The AnLF functional entity sends related data of the first ML model, the information about the first ML model, and the information about the first data set to the ADRF functional entity. Correspondingly, the ADRF functional entity receives the related data of the first ML model, the information about the first ML model, and the information about the first data set from the AnLF functional entity.

For the related data of the first ML model, refer to the foregoing related descriptions in "S502". Details are not described herein again.

The related data of the first ML model and the information about the first ML model that are sent by the AnLF functional entity may indicate that the related data is the related data of the first ML model. The information that is about the first data set and that is sent by the AnLF functional entity may indicate that the related data is stored in the first data set.

S804: The ADRF functional entity stores the related data of the first ML model based on the information about the first ML model and the information about the first data set.

After receiving the related data of the first ML model, the information about the first ML model, and the information about the first data set, the ADRF functional entity may store the related data in the first data set, and classify the related data into data belonging to the first ML model. That is, the ADRF functional entity may further identify the related data by using additional information about the ML model (for example, an ID of the ML model).

S805: The MTLF functional entity sends, to the ADRF functional entity, a request for fetching the related data of the first ML model. Correspondingly, the ADRF functional entity receives, from the MTLF functional entity, the request for fetching the related data of the first ML model.

The request for fetching the related data of the first ML model carries the information about the first ML model and the information about the first data set, so that after receiving the request, the ADRF functional entity can determine, based on the information about the first data set, a storage location of the data obtained by the MTLF functional entity based on the request, and screen for, based on the information about the first ML model, the related data of the first ML model in the first data set.

It may be understood that because the first data set stores the data of the multiple ML models, when related data of one ML model is requested, in addition to the information about the data set, information about the ML model further needs to be carried in a message, so that the related data of the ML model can be obtained.

S806: The ADRF functional entity sends the related data of the first ML model to the MTLF functional entity. Correspondingly, the MTLF functional entity receives the related data of the first ML model from the ADRF functional entity.

That is, after screening for the related data of the first ML model based on the information about the first ML model and the information about the first data set, the ADRF functional entity may send the related data to the MTLF functional entity.

Optionally, after the MTLF functional entity obtains the related data of the first ML model, the communication method may further include: The MTLF functional entity performs retraining or newly regenerates a second ML model based on the related data.

The MTLF functional entity may perform retraining or newly generate the second ML model based on the related data of the first ML model by reusing a method in a conventional technology. Details are not described herein again.

Further, after the MTLF functional entity generates the second ML model, the communication method may further include: The MTLF functional entity sends information about the second ML model to the AnLF functional entity. Correspondingly, the AnLF functional entity receives the information about the second ML model from the MTLF functional entity. In this way, the AnLF functional entity may fetch the second ML model, namely, a latest ML model, based on the information about the second ML model, so that the AnLF functional entity can use the latest ML model, to improve prediction accuracy when the AnLF functional entity uses the ML model.

It may be understood that the MTLF functional entity may further request the AnLF functional entity to monitor analytics accuracy of the first ML model. In a process in which the AnLF functional entity monitors the ML model analytics accuracy of the first ML model, the MTLF functional entity or the AnLF functional entity may set a third data set used to store the related data (for example, data deviated at a time which a prediction refers to) of the first ML model, and send information about the third data set to the AnLF functional entity or the MTLF functional entity, so that the MTLF functional entity can use data in the third data set when updating the ML model. For details, refer to the foregoing related descriptions in "Manner 1 to Manner 3 of S502". Details are not described herein again.

In conclusion, related data of each ML model may be stored in a data set, and the related data is marked with a tag of the corresponding ML model, to distinguish a specific ML model to which the related data belongs. To be specific, the MTLF functional entity may fetch a data set tag from a received request message, that is, know that data of each ML model is stored in a data set corresponding to the data set tag. In addition, the MTLF functional entity sends, to the ADRF functional entity, a request that is used to fetch the related data of the first ML model and that carries the information about the first ML model and the information about the first data set, so that the ADRF functional entity can find, based on the information about the first data set, the data set storing the related data, screen for the related data of the first ML model in the first data set based on the information about the first ML model, and send the related data to the MTLF functional entity. In this way, the MTLF functional entity may evaluate the first ML model based on the related data, to improve reliability of evaluating the first ML model.

It may be understood that a difference between the foregoing two embodiments (the embodiment shown in FIG. 5 and the embodiment shown in FIG. 6) and this embodiment of this application lies in that: In the foregoing two embodiments, different data sets are allocated to different ML models, and related data of the different ML models is distinguished by separately storing the related data of the different ML models in the different data sets. In this embodiment of this application, related data of multiple ML models is stored in one data set, and the related data of each ML model is distinguished based on information about an ML model in each piece of data in the data set. In the three embodiments, definitions of information, sending and receiving of messages, ML model evaluation, and the like are of similar implementation principles. Therefore, reference may be made to the three embodiments for understanding. Details are not described herein again. In addition, the three embodiments may be used in combination with each other. This is not limited.

### Scenario 2:

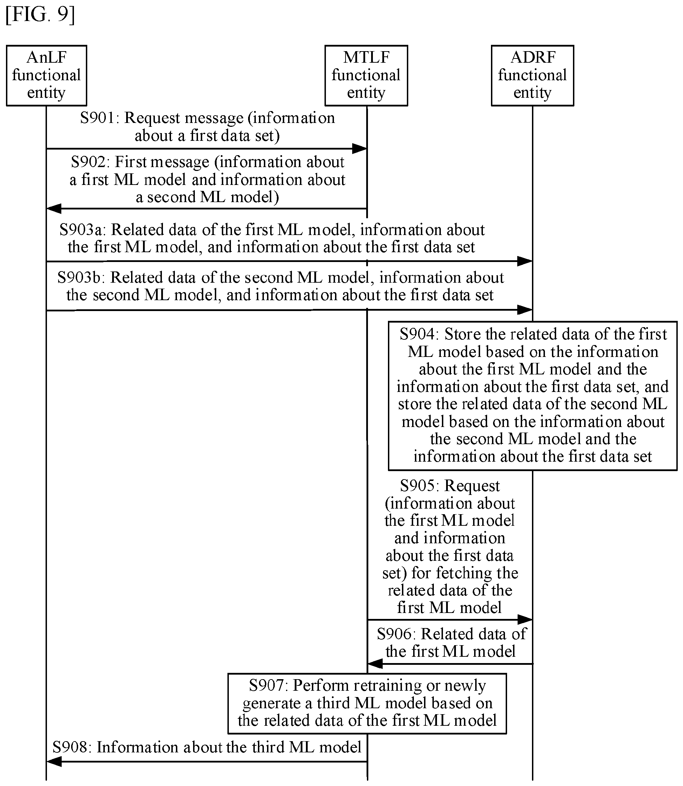

FIG. 9 is a schematic flowchart 5 of a communication method according to an embodiment of this application. The communication method is applicable to the foregoing communication system, and mainly relates to an AnLF functional entity, an MTLF functional entity, and an ADRF functional entity. In Scenario 5, related data of each ML model is stored in a same data set, and the MTLF functional entity may fetch the related data of the ML model from the ADRF functional entity based on information about the ML model and information about the data set.

As shown in FIG. 9, a procedure of the communication method is shown below.

S901: The AnLF functional entity sends a request message to the MTLF functional entity. Correspondingly, the MTLF functional entity receives the request message from the AnLF functional entity.

The request message is used to request an ML model, and carries information about a first data set. For details, refer to the foregoing related descriptions in "S801". Details are not described herein again.

S902: The MTLF functional entity send a first message to the AnLF functional entity. Correspondingly, the AnLF functional entity receives the first message from the MTLF functional entity.

The first message carries information about a first ML model and information about a second ML model, so that the AnLF functional entity fetches the first ML model and the second ML model at corresponding locations based on the information about the first ML model and the information about the second ML model.

S903a: The AnLF functional entity sends related data of the first ML model, the information about the first ML model, and the information about the first data set to the ADRF functional entity. Correspondingly, the ADRF functional entity receives the related data of the first ML model, the information about the first ML model, and the information about the first data set from the AnLF functional entity.

S903b: The AnLF functional entity sends related data of the second ML model, the information about the second ML model, and the information about the first data set to the ADRF functional entity. Correspondingly, the ADRF functional entity receives the related data of the second ML model, the information about the second ML model, and the information about the first data set from the AnLF functional entity.

S904: The ADRF functional entity stores the related data of the first ML model based on the information about the first ML model and the information about the first data set, and stores the related data of the second ML model based on the information about the second ML model and the information about the first data set.

When storing the related data (denoted as related data #a) of the first ML model and the related data (denoted as related data #b) of the second ML model, the ADRF functional entity may further identify each piece of related data by using an ML model ID, for example, identify the related data #a by using the first ML model, and identify the related data #b by using the second ML model.

S905: The MTLF functional entity sends, to the ADRF functional entity, a request for fetching the related data of the first ML model. Correspondingly, the ADRF functional entity receives, from the MTLF functional entity, the request for fetching the related data of the first ML model.

The request for fetching the related data of the first ML model may carry the information about the first data set and the information about the first ML model, that is, the MTLF functional entity requests the related data of the first ML model from the ADRF functional entity.

S906: The ADRF functional entity sends the related data of the first ML model to the MTLF functional entity. Correspondingly, the MTLF functional entity receives the related data of the first ML model from the ADRF functional entity.

S907: The MTLF functional entity performs retraining or newly generates a third ML model based on the related data of the first ML model.

S908: The MTLF functional entity sends information about the third ML model to the AnLF functional entity. Correspondingly, the AnLF functional entity receives the information about the third ML model from the MTLF functional entity.

After receiving the information about the third ML model, the AnLF functional entity may fetch the third ML model, namely, a latest ML model, from a corresponding location based on the information about the third ML model, and use the third ML model.

For specific implementation of S901 to S908, refer to the related descriptions of S801 to S806. Details are not described herein again.

It may be understood that S903a and S903b may be performed at the same time, or may be performed in a sequence. For example, S903a is performed before S903b, or S903b is performed before S903a. This is not limited in this embodiment of this application.

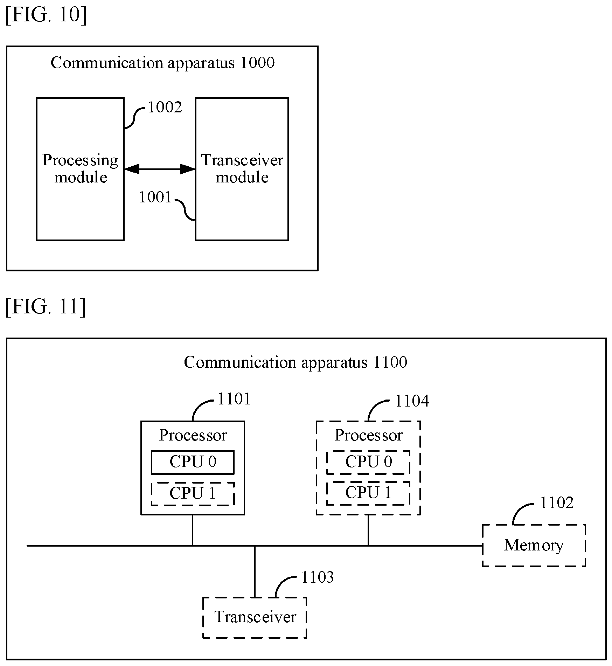

FIG. 10 is a diagram 1 of a structure of a communication apparatus according to an embodiment of this application. For example, as shown in FIG. 10, the communication apparatus 1000 includes a transceiver module 1001 and a processing module 1002. For ease of description, FIG. 10 shows only main parts of the communication apparatus.

In some embodiments, the communication apparatus 1000 is applicable to the communication system shown in FIG. 4, and perform a function of the AnLF functional entity in the method shown in FIG. 5.

The transceiver module 1001 is configured to receive information about a first ML model from an MTLF functional entity. The information about the first ML model is used to fetch the first ML model. The processing module 1002 is configured to control the transceiver module 1001 to send a first message to the MTLF functional entity. The first message carries the information about the first ML model and information about a first data set, and the first data set is used to store related data of the first ML model.

In a possible design solution, the first ML model is multiple ML models, the information about the first ML model is information about the multiple ML models, the information about the first data set is information about multiple data sets, the multiple ML models are in one-to-one correspondence with the information about the multiple ML models, and the information about the multiple ML models is in one-to-one correspondence with the information about the multiple data sets.

In a possible design solution, the information about the first ML model is any one of the following: identification information of the first ML model, a URL address of the first ML model, or an FQDN of the first ML model.

In a possible design solution, the information about the first data set includes identification information of the first data set and/or identification information of a first analytics data repository function ADRF functional entity.

In a possible design solution, the processing module 1002 is further configured to control the transceiver module 1001 to send a request message to the MTLF functional entity. The request message is used to request an ML model. In response to the request message, the transceiver module 1001 is further configured to receive information about the first ML model from the MTLF functional entity.

In a possible design solution, the processing module 1002 is further configured to control the transceiver module 1001 to send a request message to the MTLF functional entity. The request message is used to request an ML model. In response to the request message, the transceiver module 1001 is further configured to receive information about a second ML model from the MTLF functional entity. The information about the second ML model is used to fetch the second ML model. Information about a second data set carried in the request message is used to indicate that the second data set corresponds to the ML model sent by the MTLF functional entity after the MTLF functional entity receives the request message. The second data set is used to store related data of the second ML model.

Optionally, the information about the second data set includes identification information of the second data set and/or identification information of a second ADRF functional entity.

Optionally, the first ML model is an ML model retrained based on the second ML model, or the first ML model is a newly generated ML model.

In a possible design solution, the transceiver module 1001 is further configured to receive, from the MTLF functional entity, a request for ML model monitoring. The request for ML model monitoring carries the information about the first ML model and information about a third data set. The third data set is used to store the related data of the first ML model.

In a possible design solution, the transceiver module 1001 is further configured to receive, from the MTLF functional entity, a request for ML model monitoring. The request for ML model monitoring carries the information about the first ML model. In response to the request for ML model monitoring, the transceiver module 1001 is further configured to send information about a third data set to the MTLF functional entity. The third data set is used to store the related data of the first ML model.

In a possible design solution, the processing module 1002 is further configured to monitor analytics accuracy of the first ML model. When the analytics accuracy of the first ML model is insufficient, the processing module 1002 is further configured to control the transceiver module 1001 to send a notification request message to the MTLF functional entity. The notification request message carries information about a third data set. The third data set is used to store the related data of the first ML model.

Optionally, the information about the third data set includes identification information of the third data set and/or identification information of a third ADRF functional entity.

In a possible design solution, the related data includes at least one of the following: input data, prediction data, ground truth data at a time which a prediction refers to, or deviation data at the time which the prediction refers to.

In a possible design solution, the AnLF functional entity is carried on a network data analytics function NWDAF network element, and/or the MTLF functional entity is carried on an NWDAF network element.

Optionally, the transceiver module 1001 may include a sending module (not shown in FIG. 10) and a receiving module (not shown in FIG. 10). The sending module is configured to implement a sending function of the communication apparatus 1000, and the receiving module is configured to implement a receiving function of the communication apparatus 1000.

Optionally, the communication apparatus 1000 may further include a storage module (not shown in FIG. 10), and the storage module stores a program or instructions. When the processing module 1002 executes the program or the instruction, the communication apparatus 1000 is caused to perform a function of the AnLF functional entity in the method shown in FIG. 5 in the foregoing methods.

It may be understood that the communication apparatus 1000 may be a network device, or may be a chip (system) or another part or component that may be disposed in the network device, or may be an apparatus containing the network device. This is not limited in this application.

In addition, for technical effects of the communication apparatus 1000, refer to the technical effects of the communication method shown in FIG. 5. Details are not described herein again.

In some other embodiments, the communication apparatus 1000 is applicable to the communication system shown in FIG. 4, and perform a function of the MTLF functional entity in the method shown in FIG. 5.

The processing module 1002 is configured to control the transceiver module 1001 to send information about a first ML model to an AnLF functional entity. The information about the first ML model is used to indicate the first ML model. The transceiver module 1001 is configured to receive a first message from the AnLF functional entity. The first message carries the information about the first ML model and information about a first data set, and the first data set is used to store related data of the first ML model.

In a possible design solution, the first ML model is multiple ML models, the information about the first ML model is information about the multiple ML models, the information about the first data set is information about multiple data sets, the multiple ML models are in one-to-one correspondence with the information about the multiple ML models, and the information about the multiple ML models is in one-to-one correspondence with the information about the multiple data sets.

In a possible design solution, the information about the first ML model is any one of the following: identification information of the first ML model, a URL address of the first ML model, or an FQDN of the first ML model.

In a possible design solution, the information about the first data set includes identification information of the first data set and/or identification information of a first analytics data repository function ADRF functional entity.

In a possible design solution, the transceiver module 1001 is further configured to receive a request message from the AnLF functional entity. The request message is used to request an ML model. When the request message is received, the processing module 1002 is further configured to control the transceiver module 1001 to send the information about the first ML model to the AnLF functional entity.

In a possible design solution, the transceiver module 1001 is further configured to receive a request message from the AnLF functional entity. The request message is used to request an ML model. The request message carries information about a second data set, and the second data set is used to store related data of the ML model sent by the MTLF functional entity after the MTLF functional entity receives the request message. When the request message is received, the processing module 1002 is further configured to control the transceiver module 1001 to send information about a second ML model to the AnLF functional entity. The information about the second ML model is used to fetch the second ML model.

Optionally, the information about the second data set includes identification information of the second data set and/or identification information of a second ADRF functional entity.

Optionally, the first ML model is an ML model retrained based on the second ML model, or the first ML model is a newly generated ML model.

Optionally, the processing module 1002 is further configured to evaluate the second ML model by using the second data set.

In a possible design solution, the processing module 1002 is further configured to evaluate the first ML model by using the first data set.

In a possible design solution, when the MTLF functional entity receives an ML model monitoring registration request, the processing module 1002 is further configured to control the transceiver module 1001 to send, to the AnLF functional entity, a request for ML model monitoring. The request for ML model monitoring carries the information about the first ML model and information about a third data set. The third data set is used to store the related data of the first ML model.

In a possible design solution, the transceiver module 1001 is further configured to receive information about a third data set from the AnLF functional entity. The third data set is used to store the related data of the first ML model.

Optionally, the information about the third data set is carried in a response for ML model monitoring and/or a notification request message.

Optionally, the information about the third data set includes identification information of the third data set and/or identification information of a third ADRF functional entity.

In a possible design solution, the related data includes at least one of the following: input data, prediction data, ground truth data at a time which a prediction refers to, or deviation data at the time which the prediction refers to.

In a possible design solution, the AnLF functional entity is carried on a network data analytics function NWDAF network element, and/or the MTLF functional entity is carried on an NWDAF network element.

Optionally, the transceiver module 1001 may include a sending module (not shown in FIG. 10) and a receiving module (not shown in FIG. 10). The sending module is configured to implement a sending function of the communication apparatus 1000, and the receiving module is configured to implement a receiving function of the communication apparatus 1000.

Optionally, the communication apparatus 1000 may further include a storage module (not shown in FIG. 10), and the storage module stores a program or instructions. When the processing module 1002 executes the program or the instruction, the communication apparatus 1000 is caused to perform a function of the MTLF functional entity in the method shown in FIG. 5 in the foregoing methods.

It may be understood that the communication apparatus 1000 may be a network device, or may be a chip (system) or another part or component that may be disposed in the network device, or may be an apparatus containing the network device. This is not limited in this application.

In addition, for technical effects of the communication apparatus 1000, refer to the technical effects of the communication method shown in FIG. 5. Details are not described herein again.

In some other embodiments, the transceiver module 1001 is configured to perform receiving and sending functions in the methods shown in FIG. 6 to FIG. 9, and the processing module 1002 is configured to perform other functions other than the receiving and sending functions in the methods shown in FIG. 6 to FIG. 9.

Optionally, the transceiver module 1001 may include a sending module (not shown in FIG. 10) and a receiving module (not shown in FIG. 10). The sending module is configured to implement a sending function of the communication apparatus 1000, and the receiving module is configured to implement a receiving function of the communication apparatus 1000.

Optionally, the communication apparatus 1000 may further include a storage module (not shown in FIG. 10), and the storage module stores a program or instructions. When the processing module 1002 executes the program or the instruction, the communication apparatus 1000 is caused to perform a function of the MTLF functional entity, the AnLF functional entity, or the ADRF functional entity in the methods shown in FIG. 6 to FIG. 9 in the foregoing methods.

It may be understood that the communication apparatus 1000 may be a network device, or may be a chip (system) or another part or component that may be disposed in the network device, or may be an apparatus containing the network device. This is not limited in this application.

FIG. 11 is a diagram 2 of a structure of a communication apparatus according to an embodiment of this application. For example, the communication apparatus may be a terminal, or may be a chip (system) or another part or component that may be disposed in the terminal. As shown in FIG. 11, the communication apparatus 1100 may include a processor 1101. Optionally, the communication apparatus 1100 may further include a memory 1102 and/or a transceiver 1103. The processor 1101 is coupled to the memory 1102 and the transceiver 1103, for example, may be connected to the memory 1102 and the transceiver 1103 through a communication bus.

The following describes parts of the communication apparatus 1100 in detail with reference to FIG. 11.

The processor 1101 is a control center of the communication apparatus 1100, and may be one processor, or may be a general term of multiple processing elements. For example, the processor 1101 is one or more central processing units (central processing units, CPUs), or may be an application-specific integrated circuit (application-specific integrated circuit, ASIC), or is configured as one or more integrated circuits implementing embodiments of this application, for example, one or more microprocessors (digital signal processors, DSPs) or one or more field programmable gate arrays (field programmable gate arrays, FPGAs).

Optionally, the processor 1101 may perform various functions of the communication apparatus 1100 by running or executing a software program stored in the memory 1102 and invoking data stored in the memory 1102, for example, perform the communication methods shown in FIG. 5 to FIG. 8.

During specific implementation, in an embodiment, the processor 1101 may include one or more CPUs, for example, a CPU 0 and a CPU 1 shown in FIG. 11.

During specific implementation, in an embodiment, the communication apparatus 1100 may alternatively include multiple processors, for example, the processor 1101 and a processor 1104 shown in FIG. 11. Each of the processors may be a single-core processor (single-CPU), or may be a multi-core processor (multi-CPU). The processor herein may be one or more devices, circuits, and/or processing cores configured to process data (for example, computer program instructions).

The memory 1102 is configured to store a software program for performing the solutions in this application, and the processor 1101 controls execution of the software program. For a specific implementation, refer to the foregoing method embodiments. Details are not described herein again.

Optionally, the memory 1102 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instruction or data structure and that can be accessed by a computer. However, this is not limited thereto. The memory 1102 may be integrated with the processor 1101, or may exist independently, and is coupled to the processor 1101 through an interface circuit (not shown in FIG. 11) of the communication apparatus 1100. This is not specifically limited in this embodiment of this application.

The transceiver 1103 is configured to communicate with another communication apparatus. For example, the communication apparatus 1100 is a terminal, and the transceiver 1103 may be configured to communicate with a network device or another terminal device. For another example, the communication apparatus 1100 is a network device, and the transceiver 1103 may be configured to communicate with a terminal or another network device.

Optionally, the transceiver 1103 may include a receiver and a transmitter (not separately shown in FIG. 11). The receiver is configured to implement a receiving function, and the transmitter is configured to implement a sending function.

Optionally, the transceiver 1103 may be integrated with the processor 1101, or may exist independently, and is coupled to the processor 1101 through an interface circuit (not shown in FIG. 11) of the communication apparatus 1100. This is not specifically limited in this embodiment of this application.

It may be understood that the structure of the communication apparatus 1100 shown in FIG. 11 does not constitute any limitation on the communication apparatus. An actual communication apparatus may include more or fewer parts than those shown in the figure, or combine some parts, or have different part arrangement.

In addition, for technical effects of the communication apparatus 1100, refer to the technical effects of the method in the foregoing method embodiments. Details are not described herein again.

An embodiment of this application further provides a communication chip. The communication chip stores instructions. When the chip runs on a communication device, the method provided in embodiments of this application is implemented.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or a part of the foregoing embodiments may be implemented using software, hardware (for example, circuit), firmware, or any combination thereof. When the software is used for implementation, the foregoing embodiments may be implemented completely or partially in a form of a computer program product. The computer program product includes one or more computer instructions or computer programs. When the computer instructions or the computer programs are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "multiple" means two or more. "At least one of the following items (pieces)" or a similar expression thereof means any combination of these items, including a singular item (piece) or any combination of plural items (pieces). For example, at least one (piece) of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division during actual implementation. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position or may be distributed on multiple network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computer device (which may be a personal computer, a server, a network device, or the like) to perform all or a part of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving, by an analytics logical function AnLF functional entity, information about a first machine learning ML model from a model training logical function MTLF functional entity, wherein the information about the first ML model is used to fetch the first ML model; and
sending, by the AnLF functional entity, a first message to the MTLF functional entity, wherein the first message carries the information about the first ML model and information about a first data set, and the first data set is used to store related data of the first ML model.

2. The method according to claim 1, wherein the method further comprises:
sending, by the AnLF functional entity, a request message to the MTLF functional entity, wherein the request message is used to request an ML model; and
receiving, by the AnLF functional entity, the information about the first ML model from the MTLF functional entity comprises:
receiving, by the AnLF functional entity, the information about the first ML model from the MTLF functional entity in response to the request message.

3. The method according to claim 1, wherein the method further comprises:
sending, by the AnLF functional entity, a request message to the MTLF functional entity, wherein the request message is used to request an ML model, and the request message carries information about a second data set; and
receiving, by the AnLF functional entity, information about a second ML model from the MTLF functional entity in response to the request message, wherein the information about the second ML model is used to fetch the second ML model, and the second data set is used to store related data of the ML model sent by the MTLF functional entity after the MTLF functional entity receives the request message.

4. The method according to claim 3, wherein the first ML model is an ML model retrained based on the second ML model, or the first ML model is a newly generated ML model.

5. The method according to any one of claims 1 to 4, wherein the method further comprises:
receiving, by the AnLF functional entity from the MTLF functional entity, a request for ML model monitoring, wherein the request for ML model monitoring carries the information about the first ML model and information about a third data set, and the third data set is used to store the related data of the first ML model.

6. The method according to any one of claims 1 to 4, wherein the method further comprises:
receiving, by the AnLF functional entity from the MTLF functional entity, a request for ML model monitoring, wherein the request for ML model monitoring carries the information about the first ML model; and
sending, by the AnLF functional entity, information about a third data set to the MTLF functional entity in response to the request for ML model monitoring, wherein the third data set is used to store the related data of the first ML model.

7. The method according to any one of claims 1 to 4, wherein the method further comprises:
monitoring, by the AnLF functional entity, analytics accuracy of the first ML model; and
when the analytics accuracy of the first ML model is insufficient, sending, by the AnLF functional entity, a notification request message to the MTLF functional entity, wherein the notification request message carries information about a third data set, and the third data set is used to store the related data of the first ML model.

8. A communication method, wherein the method comprises:
sending, by a model training logical function MTLF functional entity, information about a first machine learning ML model to an analytics logical function AnLF functional entity, wherein the information about the first ML model is used to indicate the first ML model; and
receiving, by the MTLF functional entity, a first message from the AnLF functional entity, wherein the first message carries the information about the first ML model and information about a first data set, and the first data set is used to store related data of the first ML model.

9. The method according to claim 8, wherein the method further comprises:
receiving, by the MTLF functional entity, a request message from the AnLF functional entity, wherein the request message is used to request an ML model; and
sending, by the MTLF functional entity, the information about the first ML model to the AnLF functional entity comprises:
when receiving the request message, sending, by the MTLF functional entity, the information about the first ML model to the AnLF functional entity.

10. The method according to claim 8, wherein the method further comprises:
receiving, by the MTLF functional entity, a request message from the AnLF functional entity, wherein the request message is used to request an ML model, and the request message carries information about a second data set; and
when receiving the request message, sending, by the MTLF functional entity, information about a second ML model to the AnLF functional entity, wherein the information about the second ML model is used to fetch the second ML model, and the second data set is used to store related data of the ML model sent by the MTLF functional entity after the MTLF functional entity receives the request message.

11. The method according to claim 10, wherein the first ML model is an ML model retrained based on the second ML model, or the first ML model is a newly generated ML model.

12. The method according to claim 10 or 11, wherein the method further comprises:
evaluating, by the MTLF functional entity, the second ML model based on the second data set.

13. The method according to any one of claims 8 to 12, wherein the method further comprises:
evaluating, by the MTLF functional entity, the first ML model based on the first data set.

14. The method according to any one of claims 8 to 13, wherein the method further comprises:
when the MTLF functional entity receives an ML model monitoring registration request, sending, by the MTLF functional entity to the AnLF functional entity, a request for ML model monitoring, wherein the request for ML model monitoring carries the information about the first ML model and information about a third data set, and the third data set is used to store the related data of the first ML model.

15. The method according to any one of claims 8 to 13, wherein the method further comprises:
receiving, by the MTLF functional entity, information about a third data set from the AnLF functional entity, wherein the third data set is used to store the related data of the first ML model.

16. The method according to claim 15, wherein the information about the third data set is carried in a response for ML model monitoring and/or a notification request message.

17. A communication method, wherein the method comprises:
receiving, by a model training logical function MTLF functional entity, a request message from an analytics logical function AnLF functional entity, wherein the request message is used to request a machine learning ML model; and
sending, by the MTLF functional entity, a first message to the AnLF functional entity, wherein the first message carries information about a first ML model and information about a first data set, the information about the first ML model is used to indicate the first ML model, and the first data set is used to store related data of the first ML model.

18. The method according to claim 17, wherein the method further comprises:
sending, by the MTLF functional entity to a first ADRF functional entity, a request for creating the first data set in the first ADRF functional entity.

19. The method according to claim 17 or 18, wherein the method further comprises:
evaluating, by the MTLF functional entity, the first ML model based on the first data set.

20. A communication method, wherein the method comprises:
sending, by an analytics logical function AnLF functional entity, a request message to a model training logical function MTLF functional entity, wherein the request message is used to request a machine learning ML model; and
receiving, by the AnLF functional entity, a first message from the MTLF functional entity, wherein the first message carries information about a first ML model and information about a first data set, the information about the first ML model is used to fetch the first ML model, and the first data set is used to store related data of the first ML model.

21. A communication method, wherein the method comprises:
receiving, by a model training logical function MTLF functional entity, a request message from an analytics logical function AnLF functional entity, wherein the request message carries information about a first data set, the first data set is used to store related data of multiple ML models, and the multiple ML models comprise a first ML model;
sending, by the MTLF functional entity to an analytics data repository function ADRF functional entity, a request for fetching the related data of the first ML model, wherein the request for fetching the related data of the first ML model carries information about the first ML model and the information about the first data set; and
receiving, by the MTLF functional entity, the related data of the first ML model from the ADRF functional entity.

22. The method according to claim 21, wherein the method further comprises:
sending, by the MTLF functional entity, a first message to the AnLF functional entity, wherein the first message carries the information about the first ML model, and the information about the first ML model is used to indicate the first ML model.

23. The method according to claim 21 or 22, wherein the method further comprises:
performing retraining or newly generating, by the MTLF functional entity, a second ML model based on the related data of the first ML model.

24. The method according to claim 23, wherein the method further comprises:
sending, by the MTLF functional entity, information about the second ML model to the AnLF functional entity, wherein the information about the second ML model is used to indicate the second ML model.

25. A communication method, wherein the method comprises:
receiving, by an analytics data repository function ADRF functional entity, related data of a first machine learning ML model, information about the first ML model, and information about a first data set from an analytics logical function AnLF functional entity, wherein the first data set is used to store the related data of the first ML model; and
storing, by the ADRF functional entity, the related data of the first ML model based on the information about the first ML model and the information about the first data set.

26. The method according to claim 25, wherein the method further comprises:
receiving, by the ADRF functional entity from a model training logical function MTLF functional entity, a request for fetching the related data of the first ML model, wherein the request for fetching the related data of the first ML model comprises the information about the first ML model and the information about the first data set; and
sending, by the ADRF functional entity, the related data of the first ML model to the MTLF functional entity based on the information about the first ML model and the information about the first data set.

27. A communication method, wherein the method comprises:
receiving, by an analytics logical function AnLF functional entity, a first message from a model training logical function MTLF functional entity, wherein the first message carries information about a first ML model, and the information about the first ML model is used to fetch the first ML model; and
sending, by the AnLF functional entity, related data of the first ML model, the information about the first ML model, and information about a first data set to an analytics data repository function ADRF functional entity, wherein the first data set is used to store related data of multiple ML models, and the multiple ML models comprise the first ML model.

28. The method according to claim 27, wherein the method further comprises:
creating, by the AnLF functional entity, the first data set.

29. The method according to any one of claims 1 to 28, wherein the information about the first ML model is any one of the following: identification information of the first ML model, a uniform resource locator URL address of the first ML model, or a fully qualified domain name FQDN of the first ML model.

30. The method according to any one of claims 1 to 29, wherein the information about the first data set comprises identification information of the first data set and/or identification information of the first analytics data repository function ADRF functional entity.

31. The method according to any one of claims 1 to 30, wherein the related data comprises at least one of the following: input data, prediction data, ground truth data at a time which a prediction refers to, or deviation data at the time which the prediction refers to.

32. The method according to any one of claims 1 to 31, wherein the AnLF functional entity is carried on a network data analytics function NWDAF network element, and/or the MTLF functional entity is carried on an NWDAF network element.

33. A communication apparatus, wherein the apparatus comprises a module configured to perform the method according to any one of claims 1 to 32.

34. A communication apparatus, wherein the communication apparatus comprises a processor and a memory, the memory is configured to store computer instructions, and when the processor executes the instructions, the communication apparatus is caused to perform the method according to any one of claims 1 to 32.

35. A communication system, wherein the communication system comprises at least one of the following: an analytics logical function AnLF functional entity, a model training logical function MTLF functional entity, or an analytics data repository function ADRF functional entity network element, wherein the AnLF functional entity is configured to perform the method according to any one of claims 1 to 7, 20, 27, or 28, the MTLF functional entity is configured to perform the method according to any one of claims 8 to 16, 17 to 19, or 21 to 24, and the ADRF functional entity network element is configured to perform the method according to claim 25 or 26.

36. A communication chip, wherein the communication chip stores instructions, and when the chip runs on a communication device, the method according to any one of claims 1 to 32 is implemented.

37. A computer-readable storage medium, wherein the computer-readable storage medium comprises a computer program or instructions, and when the computer program or the instructions are run on a computer, the computer is caused to perform the method according to any one of claims 1 to 32.

38. A computer program product, wherein the computer program product comprises a computer program or instructions, and when the computer program or the instructions are run on a communication apparatus, the method according to any one of claims 1 to 32 is performed.
